# EUROPEAN PATENT SPECIFICATION

(11) **EP 4 345 359 B1**
(45) Date of publication and mention of the grant of the patent: **25.02.2026**
(21) Application number: 22845167.0
(22) Date of filing: 11.07.2022
(51) Int. Cl.: G03B 17/56, F16M 11/04, F16M 11/10, F16M 11/18, G03B 30/00, H04N 23/57

(54) **TELESCOPIC ROTARY CAMERA MODULE, AND ELECTRONIC DEVICE**
TELESKOPISCHES DREHKAMERAMODUL UND ELEKTRONISCHE VORRICHTUNG
MODULE DE CAMÉRA ROTATIF TÉLESCOPIQUE ET DISPOSITIF ÉLECTRONIQUE

(30) Priority: 19.07.2021 CN 202110814731; 26.01.2022 CN 202210093708
(43) Date of publication of application: 03.04.2024
(73) Proprietor: Huawei Technologies Co., Ltd., Shenzhen, Guangdong 518129 (CN)
(72) Inventor: HE, Hao, Shenzhen, Guangdong 518129 (CN); GUO, Zhibin, Shenzhen, Guangdong 518129 (CN); DUAN, Yongji, Shenzhen, Guangdong 518129 (CN); ZHANG, Hongbo, Shenzhen, Guangdong 518129 (CN)
(74) Representative: Goddar, Heinz J.
(86) International application number: PCT/CN2022/104825
(87) International publication number: WO 2023/001002

(56) References cited:
- CN-A- 111 131 673
- CN-A- 112 929 546
- CN-A- 112 954 143
- CN-U- 212 064 178
- US-A1- 2017 176 843

## Description

This application claims priorities to Chinese Patent Application No. 202110814731.X, filed with the China National Intellectual Property Administration on July 19, 2021, and entitled "TELESCOPIC ROTARY CAMERA MODULE AND ELECTRONIC DEVICE", and to Chinese Patent Application No. 202210093708.0, filed with the China National Intellectual Property Administration on January 26, 2022, and entitled "TELESCOPIC ROTARY CAMERA MODULE AND ELECTRONIC DEVICE.

### TECHNICAL FIELD

Embodiments of this application relate to the terminal field, and in particular, to a telescopic rotary camera module and an electronic device.

### BACKGROUND

To avoid impact of a fixed camera arrangement on appearance and overall layout of an entire device, a conventional technology introduces products with telescopic cameras, such as a mobile phone with a telescopic camera, a large screen with a telescopic camera, and the like. Each of the products implements transfer of telescopic driving forces by using transmission mechanisms such as a lead screw and screw nut, allowing the camera to extend or retract relative to a fixed body.

In different application scenarios, an outwardly extended camera needs to be capable of rotating an angle. This allows for adjusting an angle of view of the camera, to implement full coverage for a to-be-shot object.

However, limited by a structure of an existing camera module, the transmission mechanism has relatively low motion accuracy, and poor stability. Jamming and stuttering are likely to occur, and the transmission mechanism cannot be applied to an application scenario with a relatively high stability requirement. Relevant prior art documents are CN 112 929 546 A and CN 212 064 178 U.

### SUMMARY

Embodiments of this application provide a telescopic rotary camera module and an electronic device. Both movement accuracy of the camera module, and stability of retraction, extension, and rotation actions can be improved through structure optimization.

According to a first aspect, an embodiment of this application provides a telescopic rotary camera module. Ahead assembly of the telescopic rotary camera module is hinged to a body assembly by using a rotating shaft, and is driven by a body of the telescopic rotary camera module to retract inward or extend outward relative to a base assembly. The body assembly is connected to the base assembly by using two groups of shaft sleeve-type sliding pairs, and the two groups of shaft sleeve-type sliding pairs are disposed in parallel. In this way, a basic cooperation relationship for a retraction movement or an extension movement may be established. The body assembly includes a first sliding block that is capable of sliding relative to the body. A first accommodating cavity that is adapted to the first sliding block and that is on the body is disposed in parallel with the two groups of shaft sleeve-type sliding pairs. The first sliding block includes a first stop part and a transmission part, and is adapted to the rotating shaft in a transmission manner by using the transmission part, so that the rotating shaft rotates correspondingly when the rotating shaft is linearly displaced relative to the first sliding block. Correspondingly, a limiting part is disposed on the base assembly. When the body extends outward until the first stop part on the first sliding block abuts against the limiting part, the first sliding block is in a stopped state. In this case, the body may continue to extend to drive the rotating shaft to follow and rotate, so that the head assembly rotates relative to the body, meeting a requirement on a shooting angle of view of a user. In this disposition, based on good movement accuracy of a shaft sleeve-type sliding clearance fit, the two groups of sliding pairs are disposed in parallel, to accurately control movement trajectories of retraction and extension actions of the head assembly and the body assembly. In this way, the retraction movement or the extension movement of the head assembly and the body assembly is more stable, jamming and stuttering are avoided, and mute effect is enhanced.

According to the first aspect, this embodiment of this application further provides a first implementation of the first aspect. The body assembly further includes a second sliding block and a second accommodating cavity that are adapted to each other. The second sliding block includes a second stop part that is adapted to the limiting part, and when the body extends outward until the second stop part abuts against the limiting part, the second sliding block and the first sliding block stop synchronously. Herein, the second accommodating cavity and the first accommodating cavity are disposed in parallel, and the second sliding block and the first sliding block jointly perform bearing, implementing force balance.

According to the first aspect or the first implementation of the first aspect, this embodiment of this application further provides a second implementation of the first aspect. At least a part of the first accommodating cavity wraps the first sliding block in a circumferential direction, and at least a part of the second accommodating cavity wraps the second sliding block in a circumferential direction. In this case, sliding clearance fit is separately formed between the body and the two sliding blocks. In this way, when the rotating shaft that is adapted to the stopped transmission part rotates, the rotating shaft generates a reaction force on the sliding block in a rotation process. With constraints of the circumferentially wrapped parts, the two sliding blocks can synchronously maintain an attitude that is adapted to the rotating shaft, causing no deflection, and further ensuring rotation accuracy of the head assembly.

For example, the shaft sleeve-type sliding pair may include a body shaft and a sliding sleeve that are adapted to each other and that are respectively disposed on the base assembly and the body.

According to the first aspect, the first implementation of the first aspect, or the second implementation of the first aspect, this embodiment of this application further provides a third implementation of the first aspect. A sliding block shaft is separately disposed in the first accommodating cavity and the second accommodating cavity. One end that is of the sliding block shaft and that is away from the head assembly is fixedly disposed, and the other end is mounted in each of the corresponding first sliding block and the second sliding block. Each sliding block shaft is sleeved with a sliding block elastic component that is configured to deform and store energy after each of the corresponding first sliding block and second sliding block stops. The body shaft is parallel to the sliding block shaft. In this disposition, when the two sliding blocks stop, and the body continues to extend outward, each sliding block shaft follows and extends into the corresponding sliding block. This dynamic cooperation relationship can help the body achieve good movement stability.

For example, the body shaft is located on an outer side of the sliding block shaft, and two sides of the body protrude to form the sliding sleeve. Therefore, two groups of sliding adaptation relationships are approximately arranged in one plane, reducing space occupied by an electronic device in a thickness direction.

According to the first implementation of the first aspect, the second implementation of the first aspect, or the third implementation of the first aspect, this embodiment of this application further provides a fourth implementation of the first aspect. The first stop part is a protrusion formed by extending from a body of the first sliding block, a first guide groove is provided on a wall surface of the first accommodating cavity, and the first stop part extends from the first guide groove. The second stop part is a protrusion formed by extending from a body of the second sliding block, a second guide groove is provided on a wall surface of the second accommodating cavity, and the second stop part extends from the second guide groove. In a process in which the body continues to extend until the head assembly rotates, the two guide grooves cooperate with the corresponding stop parts to ensure that the two stopped sliding blocks are slidably adapted to the corresponding accommodating cavities synchronously. This ensures a reliable force balance and avoids force tilt or stuttering.

According to the first aspect, the first implementation of the first aspect, the second implementation of the first aspect, the third implementation of the first aspect, or the fourth implementation of the first aspect, this embodiment of this application further provides a fifth implementation of the first aspect. The rotating shaft includes a first rotating shaft and a second rotating shaft that are in split design. The housing of the head assembly has a first shaft hole and a second shaft hole that are coaxially provided at an interval. Correspondingly, the body has a third shaft hole and a fourth shaft hole that are coaxially provided at an interval. After assembly, the first rotating shaft is adapted to the transmission part in a transmission manner. Two ends of the first rotating shaft are respectively inserted into the first shaft hole and the third shaft hole, and two ends of the second rotating shaft are respectively inserted into the second shaft hole and the fourth shaft hole. In this way, the split design can lower a processing accuracy requirement and difficulty of the rotating shaft, and has relatively good processing and assembly technology.

In some actual applications, the rotating shaft may further include a rotating shaft connecting rod. Two ends of the rotating shaft connecting rod are respectively fastened to the first rotating shaft and the second rotating shaft, to improve an overall bearing capacity.

According to the fifth implementation of the first aspect, this embodiment of this application further provides a sixth implementation of the first aspect. The transmission part is a rack, the first rotating shaft has a gear that meshes with the rack, and the first rotating shaft is connected to the first shaft hole through a key connection. This disposition has a simple and reliable structure, and high transmission accuracy.

According to the first aspect, the first implementation of the first aspect, the second implementation of the first aspect, the third implementation of the first aspect, the fourth implementation of the first aspect, the fifth implementation of the first aspect, or the sixth implementation of the first aspect, this embodiment of this application further provides a seventh implementation of the first aspect. The base assembly includes a base body and a guide sleeve. The head assembly and a part of the body may extend from the guide sleeve. A cross section of the housing of the head assembly is consistent with a cross section of at least a part of the body, and is adapted to an inner wall of the guide sleeve. In other words, both the housing of the head assembly and the at least a part of the body are adapted to the inner wall of the guide sleeve. In this way, the guide sleeve forms a channel for a camera to extend outward. During product assembly, the head assembly and the body assembly may be assembled together and then inserted into the guide sleeve, which has the relatively good assembly technology. In addition, the limiting part adapted to the stop part is formed on an inner end surface of the guide sleeve, to achieve appropriate simplification in structure.

According to the first aspect, the first implementation of the first aspect, the second implementation of the first aspect, the third implementation of the first aspect, the fourth implementation of the first aspect, the fifth implementation of the first aspect, the sixth implementation of the first aspect, or the seventh implementation of the first aspect, this embodiment of this application further provides an eighth implementation of the first aspect. A mating surface that is of the housing of the head assembly and that is contacted with the body is an inwardly concave arc surface, and a mating surface that is of the body and that is contacted with the housing of the head assembly is an outwardly convex arc surface. The outwardly convex arc surface is adapted to the inwardly concave arc surface. A fitting clearance between the head assembly and the body may be controlled to be relatively small. In addition, when the head assembly rotates relative to the body, a fitting clearance between the mating surfaces remains unchanged, to prevent a foreign matter from entering a joint position between the head assembly and the body assembly.

For example, a sealing component may be disposed on an inner wall at an outlet side of the guide sleeve.

According to the first aspect, the first implementation of the first aspect, the second implementation of the first aspect, the third implementation of the first aspect, the fourth implementation of the first aspect, the fifth implementation of the first aspect, the sixth implementation of the first aspect, the seventh implementation of the first aspect, or the eighth implementation of the first aspect, this embodiment of this application further provides a ninth implementation of the first aspect. The body is connected to the driving mechanism by using a connecting rod assembly. A first connecting rod is connected to a driving mechanism, and a second connecting rod is connected to the first connecting rod. In addition, a pre-compressed first connecting rod elastic component is disposed between the first connecting rod and the second connecting rod, and a pre-compressed second connecting rod elastic component is disposed between the second connecting rod and the body. A configuration is as follows: When the body extends outward, the first connecting rod drives the second connecting rod by using the first connecting rod elastic component, and the second connecting rod drives the body by using the second connecting rod elastic component. This disposition implements a bidirectional power transfer function, improves reliability and stability of power transfer, and provides a double buffer protection function. This can ensure that impact on the camera module can be effectively absorbed in a scenario like falling or reversely pulling the head assembly, protecting the driving mechanism.

According to the first aspect, the first implementation of the first aspect, the second implementation of the first aspect, the third implementation of the first aspect, the fourth implementation of the first aspect, the fifth implementation of the first aspect, the sixth implementation of the first aspect, the seventh implementation of the first aspect, the eighth implementation of the first aspect, or the ninth implementation of the first aspect, this embodiment of this application further provides a tenth implementation of the first aspect. Two first connecting shaft sleeves are disposed at end parts that are of the first connecting rod and that are connected to the second connecting rod, and two second connecting shaft sleeves are disposed at end parts that are of the second connecting rod and that are connected to the first connecting rod. The two first connecting shaft sleeves respectively abut against the two second connecting shaft sleeves. The first connecting rod elastic component is sleeved on the first connecting rod shaft. In addition, two ends of the first connecting rod shaft respectively pass through the two groups of the first connecting shaft sleeves and the second connecting shaft sleeves that abut against each other, and are fastened to the base assembly. A third connecting shaft sleeve is disposed at an end part that is of the second connecting rod and that is connected to the body, and the connecting rod base is disposed on the body. The second connecting rod elastic component and the third connecting shaft sleeve are sequentially sleeved on the second connecting rod shaft, and two ends of the second connecting rod shaft are fastened to the connecting rod base. This disposition improves working stability of the connecting rod elastic component.

For example, the first connecting rod shaft, the second connecting rod shaft, the body shaft, and the sliding block shaft are parallel, and two body shafts are symmetrically disposed relative to the second connecting rod shaft. In this case, driving force transferred by the connecting rod assembly is close to a middle position of the body, so that force applied to the two basic sliding adaptation pairs tends to be consistent, avoiding tilting and stuttering.

For example, an inwardly concave mounting surface may be provided on the body. The connecting rod base is disposed on the inwardly concave mounting surface, and the third connecting shaft sleeve is located on an inner end side of the second connecting rod, to reduce space occupation in a thickness direction.

In some specific applications, the third connecting shaft sleeve may be located on the inner end side of the second connecting rod. This can achieve relatively high product integration while satisfying the power transfer function of the transmission mechanism, and improve space utilization.

According to the first aspect, the first implementation of the first aspect, the second implementation of the first aspect, the third implementation of the first aspect, the fourth implementation of the first aspect, the fifth implementation of the first aspect, the sixth implementation of the first aspect, the seventh implementation of the first aspect, the eighth implementation of the first aspect, the ninth implementation of the first aspect, or the tenth implementation of the first aspect, this embodiment of this application further provides an eleventh implementation of the first aspect. Rigidity of the pre-compressed first connecting rod elastic component is greater than rigidity of the pre-compressed second connecting rod elastic component. In this disposition, when the impact force is generated during falling, the second connecting rod elastic component with relatively small rigidity first deforms and absorbs energy, to reduce the impact force transferred to the first connecting rod elastic component, and greatly reduce force applied on the lead screw. In addition, transfer of the impact force to the first connecting rod elastic component can be deferred, effectively protecting the driving mechanism.

In some specific applications, the driving mechanism includes a motor and a lead screw. One end of the lead screw is connected to an output end of the motor, and the other end is pivotally connected to the base assembly. In addition, a screw nut that is connected to the lead screw in a transmission manner is disposed on the first connecting rod, to provide and transfer the driving force for the camera to extend outward or retract inward.

According to the first aspect, the first implementation of the first aspect, the second implementation of the first aspect, the third implementation of the first aspect, the fourth implementation of the first aspect, the fifth implementation of the first aspect, the sixth implementation of the first aspect, the seventh implementation of the first aspect, the eighth implementation of the first aspect, the ninth implementation of the first aspect, the tenth implementation of the first aspect, or the eleventh implementation of the first aspect, this embodiment of this application further provides a twelfth implementation of the first aspect. Further, a first position sensor and a second position sensor are included. The first position sensor is configured to detect the body that retracts into a retracted state, and the second position sensor is configured to detect the body that extends into an extended state. This disposition can implement a camera position detection function.

According to the twelfth implementation of the first aspect, this embodiment of this application further provides a thirteenth implementation of the first aspect. Each of the first position sensor and the second position sensor is an opto-isolator, and the body has a reflective surface adapted to the opto-isolator. This can accurately determine that the camera is in a retracted position or an extended position.

According to the twelfth implementation of the first aspect or the thirteenth implementation of the first aspect, this embodiment of this application further provides a fourteenth implementation of the first aspect. A reflective baffle formed through lateral extension is disposed on the body, and the reflective surface is provided on a surface that is of the reflective baffle and that faces the opto-isolator. This has a simple and reliable structure.

For example, the reflective surface is sequentially provided with a white reflection region and a black reflection region in retraction and extension directions. This can more accurately detect the camera position. During use, the opto-isolator detects a color change of the reflective surface and outputs an analog signal, to implement accurate position detection. For example, a head of a raising/lowering mechanism can respond to a slight flip of the user and retract inward. This case does not constitute a limitation.

Further, for example, a region between the white reflection region and the black reflection region is a black-and-white mixture reflection region. In this way, based on a correspondence between a movement distance of the reflective surface and a voltage change, a voltage change (or a current change) corresponding to the region is relatively slow, and a running distance of the reflective baffle is lengthened, so that a detectable distance is increased.

According to a second aspect, an embodiment of this application provides an electronic device, including the telescopic rotary camera module described above, and a housing of the electronic device has an opening for a camera to retract or extend.

According to a third aspect, an embodiment of this application provides another electronic device, including a housing and a camera module. The camera module includes a head assembly with the camera, and a body assembly. The head assembly is hinged to the body assembly by using a rotating shaft, the body assembly is connected to the housing by using two groups of shaft sleeve-type sliding pairs, and the two groups of shaft sleeve-type sliding pairs are disposed in parallel. The body assembly includes a body and a first sliding block, the body has a first accommodating cavity adapted to the first sliding block, and the first accommodating cavity is disposed in parallel with the two groups of shaft sleeve-type sliding pairs. The first sliding block includes a first stop part and a transmission part. The rotating shaft is adapted to the transmission part in a transmission manner, and a limiting part is disposed on the housing. The body is driven by a driving mechanism, and drives the head assembly to retract inward or extend outward relative to the housing. When the body extends outward until the first stop part abuts against the limiting part, the first sliding block may stop. In this case, the body may continue to extend to drive the rotating shaft to follow and rotate, so that the head assembly rotates relative to the body. In this disposition, based on good movement accuracy of a shaft sleeve-type sliding clearance fit, the two groups of sliding pairs are disposed in parallel, to accurately control movement trajectories of retraction and extension actions of the head assembly and the body assembly. In this way, retraction movement or extension movement of the head assembly and the body assembly is more stable, and jamming and stuttering are avoided.

According to the third aspect, this embodiment of this application further provides a first implementation of the third aspect. The body assembly further includes a second sliding block and a second accommodating cavity that are adapted to each other. The second sliding block includes a second stop part that is adapted to the limiting part, and when the body extends outward until the second stop part abuts against the limiting part, the second sliding block and the first sliding block stop synchronously. Herein, the second accommodating cavity and the first accommodating cavity are disposed in parallel, and the second sliding block and the first sliding block jointly perform bearing, implementing force balance.

According to the third aspect or the first implementation of the third aspect, this embodiment of this application further provides a second implementation of the third aspect. At least a part of the first accommodating cavity wraps the first sliding block in a circumferential direction, and at least a part of the second accommodating cavity wraps the second sliding block in a circumferential direction. In this case, sliding clearance fit is separately formed between the body and the two sliding blocks. In this way, when the rotating shaft generates a reaction force on the sliding block in the rotation process, with constraints of the circumferentially wrapped parts, the two sliding blocks can synchronously maintain an attitude that is adapted to the rotating shaft, causing no deflection, and further ensuring rotation accuracy of the head assembly.

For example, the shaft sleeve-type sliding pair includes a body shaft and a sliding sleeve that are adapted to each other and that are respectively disposed on the housing and the body.

According to the third aspect, the first implementation of the third aspect, or the second implementation of the third aspect, this embodiment of this application further provides a third implementation of the third aspect. A sliding block shaft is separately disposed in the first accommodating cavity and the second accommodating cavity. One end that is of the sliding block shaft and that is away from the head assembly is fixedly disposed, and the other end is mounted in each of the corresponding first sliding block and the second sliding block. Each sliding block shaft is sleeved with a sliding block elastic component that is configured to deform and store energy after each of the corresponding first sliding block and second sliding block stops. The body shaft is parallel to the sliding block shaft. In this disposition, when the two sliding blocks stop, and the body continues to extend outward, each sliding block shaft follows and extends into the corresponding sliding block. This dynamic cooperation relationship can help the body achieve good movement stability.

For example, the body shaft is located on an outer side of the sliding block shaft, and two sides of the body protrude to form the sliding sleeve. Therefore, two groups of sliding adaptation relationships are approximately arranged in one plane, reducing space occupied by an electronic device in a thickness direction.

According to the third aspect, the first implementation of the third aspect, the second implementation of the third aspect, or the third implementation of the third aspect, this embodiment of this application further provides a fourth implementation of the third aspect. The rotating shaft includes a first rotating shaft and a second rotating shaft that are in split design. The housing of the head assembly has a first shaft hole and a second shaft hole that are coaxially provided at an interval. Correspondingly, the body has a third shaft hole and a fourth shaft hole that are coaxially provided at an interval. After assembly, the first rotating shaft is adapted to the transmission part in a transmission manner. Two ends of the first rotating shaft are respectively inserted into the first shaft hole and the third shaft hole, and two ends of the second rotating shaft are respectively inserted into the second shaft hole and the fourth shaft hole. In this way, the split design can lower a processing accuracy requirement and difficulty of the rotating shaft, and has relatively good processing and assembly technology.

In some actual applications, the rotating shaft may further include a rotating shaft connecting rod. Two ends of the rotating shaft connecting rod are respectively fastened to the first rotating shaft and the second rotating shaft, to improve an overall bearing capacity.

According to the fourth implementation of the third aspect, this embodiment of this application further provides a fifth implementation of the third aspect. The transmission part is a rack, the first rotating shaft has a gear that meshes with the rack, and the first rotating shaft is connected to the first shaft hole through a key connection. This disposition has a simple and reliable structure, and high transmission accuracy.

According to the third aspect, the first implementation of the third aspect, the second implementation of the third aspect, the third implementation of the third aspect, the fourth implementation of the third aspect, or the fifth implementation of the third aspect, this embodiment of this application further provides a sixth implementation of the third aspect. The body is connected to the driving mechanism by using a connecting rod assembly. A first connecting rod is connected to a driving mechanism, and a second connecting rod is connected to the first connecting rod. In addition, a pre-compressed first connecting rod elastic component is disposed between the first connecting rod and the second connecting rod, and a pre-compressed second connecting rod elastic component is disposed between the second connecting rod and the body. A configuration is as follows: When the body extends outward, the first connecting rod drives the second connecting rod by using the first connecting rod elastic component, and the second connecting rod drives the body by using the second connecting rod elastic component. This disposition implements a bidirectional power transfer function, improves reliability and stability of power transfer, and provides a double buffer protection function. This can ensure that impact on the camera module can be effectively absorbed in a scenario like falling or reversely pulling the head assembly, protecting the driving mechanism.

According to the third aspect, the first implementation of the third aspect, the second implementation of the third aspect, the third implementation of the third aspect, the fourth implementation of the third aspect, the fifth implementation of the third aspect, or the sixth implementation of the third aspect, this embodiment of this application further provides a seventh implementation of the third aspect. Two first connecting shaft sleeves are disposed at end parts that are of the first connecting rod and that are connected to the second connecting rod, and two second connecting shaft sleeves are disposed at end parts that are of the second connecting rod and that are connected to the first connecting rod. The two first connecting shaft sleeves respectively abut against the two second connecting shaft sleeves. The first connecting rod elastic component is sleeved on the first connecting rod shaft. In addition, two ends of the first connecting rod shaft respectively pass through the two groups of the first connecting shaft sleeves and the second connecting shaft sleeves that abut against each other, and are fastened to the housing. A third connecting shaft sleeve is disposed at an end part that is of the second connecting rod and that is connected to the body, and the connecting rod base is disposed on the body. The second connecting rod elastic component and the third connecting shaft sleeve are sequentially sleeved on the second connecting rod shaft, and two ends of the second connecting rod shaft are fastened to the connecting rod base. This disposition improves working stability of the connecting rod elastic component.

For example, the first connecting rod shaft, the second connecting rod shaft, the body shaft, and the sliding block shaft are parallel, and two body shafts are symmetrically disposed relative to the second connecting rod shaft. In this case, driving force transferred by the connecting rod assembly is close to a middle position of the body, so that force applied to the two basic sliding adaptation pairs tends to be consistent, avoiding tilting and stuttering.

For example, an inwardly concave mounting surface may be provided on the body. The connecting rod base is disposed on the inwardly concave mounting surface, and the third connecting shaft sleeve is located on an inner end side of the second connecting rod, to reduce space occupation in a thickness direction.

In some specific applications, the third connecting shaft sleeve may be located on the inner end side of the second connecting rod. This can achieve relatively high product integration while satisfying the power transfer function of the transmission mechanism, and improve space utilization.

According to the third aspect, the first implementation of the third aspect, the second implementation of the third aspect, the third implementation of the third aspect, the fourth implementation of the third aspect, the fifth implementation of the third aspect, the sixth implementation of the third aspect, or the seventh implementation of the third aspect, this embodiment of this application further provides an eighth implementation of the third aspect. Rigidity of the pre-compressed first connecting rod elastic component is greater than rigidity of the pre-compressed second connecting rod elastic component. In this disposition, when the impact force is generated during falling, the second connecting rod elastic component with relatively small rigidity first deforms and absorbs energy, to reduce the impact force transferred to the first connecting rod elastic component, and greatly reduce force applied on the lead screw. In addition, transfer of the impact force to the first connecting rod elastic component can be deferred, effectively protecting the driving mechanism.

According to the third aspect, the first implementation of the third aspect, the second implementation of the third aspect, the third implementation of the third aspect, the fourth implementation of the third aspect, the fifth implementation of the third aspect, the sixth implementation of the third aspect, the seventh implementation of the third aspect, or the eighth implementation of the third aspect, this embodiment of this application further provides a ninth implementation of the third aspect. Further, a first position sensor and a second position sensor are included. The first position sensor is configured to detect the body that retracts into a retracted state, and the second position sensor is configured to detect the body that extends into an extended state. This disposition can implement a camera position detection function.

According to the ninth implementation of the third aspect, this embodiment of this application further provides a tenth implementation of the third aspect. Each of the first position sensor and the second position sensor is an opto-isolator, and the body has a reflective surface adapted to the opto-isolator. This can accurately determine that the camera is in a retracted position or an extended position.

According to the ninth implementation of the third aspect or the tenth implementation of the third aspect, this embodiment of this application further provides a fourteenth implementation of the first aspect. A reflective baffle formed through lateral extension is disposed on the body, and the reflective surface is provided on a surface that is of the reflective baffle and that faces the opto-isolator. This has a simple and reliable structure.

For example, the reflective surface is sequentially provided with a white reflection region and a black reflection region in retraction and extension directions. This can more accurately detect the camera position. During use, the opto-isolator detects a color change of the reflective surface and outputs an analog signal, to implement accurate position detection. For example, a head of a raising/lowering mechanism can respond to a slight flip of the user and retract inward. This case does not constitute a limitation.

Further, for example, a region between the white reflection region and the black reflection region is a black-and-white mixture reflection region. In this way, based on a correspondence between a movement distance of the reflective surface and a voltage change, a voltage change (or a current change) corresponding to the region is relatively slow, and a running distance of the reflective baffle is lengthened, so that a detectable distance is increased.

### BRIEF DESCRIPTION OF DRAWINGS

FIG. 1 is a schematic diagram of a retracted state of a telescopic rotary camera module according to Embodiment 1 of the present invention;
FIG. 2 is a schematic diagram of an extended state of a telescopic rotary camera module according to Embodiment 1 of the present invention;
FIG. 3 is a schematic diagram of a process in which a camera of a telescopic rotary camera module extends into a shooting state according to Embodiment 1 of the present invention;
FIG. 4 is an exploded view of assembly of a telescopic rotary camera module according to Embodiment 1 of the present invention;
FIG. 5 is an exploded view of assembly of a body assembly according to Embodiment 1 of the present invention;
FIG. 6 is a schematic diagram of a transition state of a telescopic rotary camera module according to Embodiment 1 of the present invention;
FIG. 7 is a schematic diagram of an assembly relationship between a head assembly and a body assembly in a direction A shown in FIG. 6;
FIG. 8 is a sectional view formed at a cutting position B-B shown in FIG. 7;
FIG. 9 is a sectional view formed at a cutting position C-C shown in FIG. 7;
FIG. 10 is an exploded view of assembly of a head assembly and a rotating shaft according to Embodiment 1 of the present invention;
FIG. 11 is a sectional view of D-D of the body assembly shown in FIG. 4;
FIG. 12 is a schematic diagram of an overall structure of a base assembly according to Embodiment 1 of the present invention;
FIG. 13 is a schematic diagram of an assembly relationship among a head assembly and a body assembly and a base assembly according to Embodiment 1 of the present invention;
FIG. 14 is a partial sectional view of an assembly relationship of a guide sleeve shown at E in FIG. 13;
FIG. 15 is an exploded view of assembly of a connecting rod assembly according to Embodiment 1 of the present invention;
FIG. 16 is a schematic diagram of an assembly relationship of a connecting rod assembly according to Embodiment 1 of the present invention;
FIG. 17 is a schematic diagram of an initial state of a telescopic rotary camera module according to Embodiment 1 of the present invention;
FIG. 18 is a sectional view of F-F in FIG. 17;
FIG. 19 is a schematic diagram of a transition state of a telescopic rotary camera module according to Embodiment 1 of the present invention;
FIG. 20 is a sectional view of G-G in FIG. 19;
FIG. 21 is a schematic diagram of an extended state of a telescopic rotary camera module according to Embodiment 1 of the present invention;
FIG. 22 is a sectional view of H-H in FIG. 21;
FIG. 23 is a schematic diagram of a relationship between a reflective surface on a reflective baffle and an opto-isolator according to an embodiment of the present invention;
FIG. 24 is a schematic diagram of another reflective surface according to the present invention;
FIG. 25 is a schematic diagram of still another reflective surface according to the present invention;
FIG. 26 is a schematic diagram of yet another reflective surface according to the present invention;
FIG. 27 is a schematic diagram of a structure of an electronic device according to Embodiment 2 of the present invention; and
FIG. 28 is a schematic diagram of a structure of an electronic device according to Embodiment 3 of the present invention.

### DESCRIPTION OF EMBODIMENTS

Embodiments of this application provide a telescopic rotary camera module, and an electronic device to which the camera module is applied. For dynamic transmission cooperation of a head assembly with a camera in a retraction process and an extension process, embodiments perform corresponding structure optimization, to improve retraction and extension movement accuracy, and improve smoothness and stability of the dynamic cooperation.

### Embodiment 1

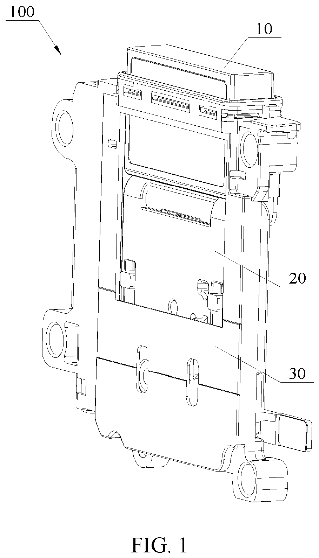

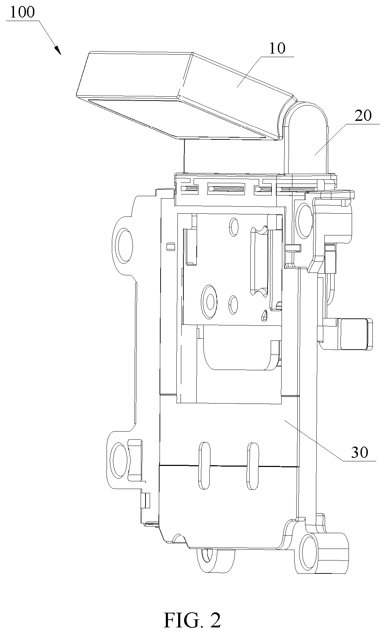

Refer to FIG. 1 and FIG. 2. FIG. 1 is a schematic diagram of a retracted state of a telescopic rotary camera module according to this embodiment. FIG. 2 is a schematic diagram of an extended state of the telescopic rotary camera module according to this embodiment.

The telescopic rotary camera module 100 shown in the figures includes a head assembly 10, a body assembly 20, and a base assembly 30. A camera is disposed on the head assembly 10, and the head assembly 10 is hinged to the body assembly 20. The body assembly 20 may drive the head assembly 10 to retract or extend relative to the base assembly 30, forming the following two states: the retracted state in which the head assembly 10 retracts to an inside of the base assembly 30, and a shooting state in which the head assembly 10 extends out of the base assembly 30.

As shown in FIG. 1, the head assembly 10 retracts into the retracted state, to protect the camera and meet a requirement of hiding the camera.

As shown in FIG. 2, the head assembly 10 entirely extends out of the base assembly 30, and rotates relative to the body assembly 20, to adjust a shooting angle of the camera. This implements full coverage for a to-be-shot object, and implementing application and interaction that meet a shooting function.

When the camera needs to be enabled, based on an operation instruction of a user, a driving mechanism drives the body assembly 20 to drive the head assembly 10 to extend outward. Based on an extension stroke of the body assembly 20, the head assembly 10 sequentially completes an extension action and a rotation action.

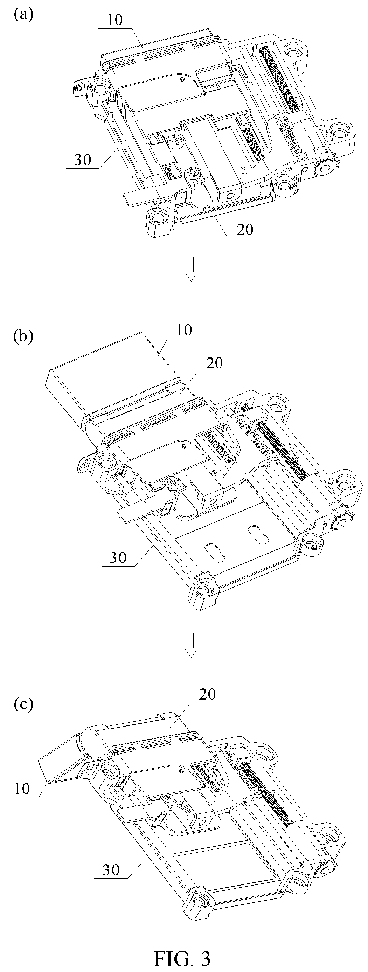

FIG. 3 is a schematic diagram of a process in which the camera of the telescopic rotary camera module extends into a shooting state according to this embodiment. All figures in FIG. 3 are formed from a rear view of the camera, to clearly show a dynamic cooperation relationship between assemblies.

An initial state is shown in (a) in FIG. 3, that is, the head assembly 10 is in the retracted state. In this case, the body assembly 20 is entirely located in the base assembly 30, the head assembly 10 is also almost entirely located in the base assembly 30, and an objective is that an outer end surface of the head assembly 10 is flush with an outer surface of a housing of an electronic device.

Driven by the body assembly 20, the head assembly 10 extends into a to-be-rotated transition state shown in (b) in FIG. 3. In this case, the head assembly 10 is entirely located at an outer side of the base assembly 30, and a part of the body assembly 20 is located on the outer side of the base assembly 30. In a specific implementation, a smaller part of the body assembly 20 exposed to the base assembly 30 indicates optimal force applied to an entire transmission mechanism.

The body assembly 20 continues to drive the head assembly 10 to extend outward. As shown in (c) in FIG. 3, the head assembly 10 completes the rotation action, and reaches the final shooting state, to meet a shooting function requirement. In a specific implementation, a rotation angle may be set based on a product design or an actual user requirement.

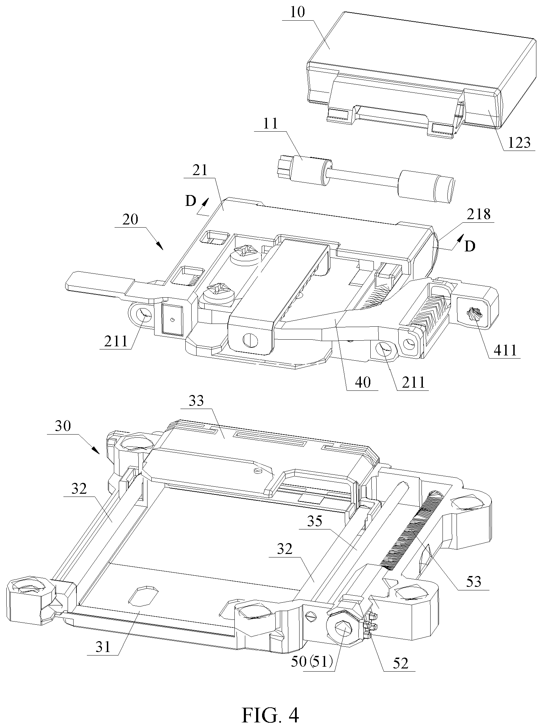

FIG. 4 is an exploded view of assembly of a telescopic rotary camera module according to this embodiment.

In this embodiment, the head assembly 10 is hinged to the body assembly 20 by using a rotating shaft 11, the body assembly 20 is connected to the base assembly 30 by using two groups of shaft sleeve-type sliding pairs, and the two groups of shaft sleeve-type sliding pairs are disposed in parallel. This establishes a basic transmission cooperation relationship for a retraction movement or an extension movement. Based on good movement accuracy of a shaft sleeve-type sliding clearance fit, the two groups of sliding pairs are disposed in parallel, to strictly control movement trajectories of the retraction and extension of the head assembly 10 and the body assembly 20. In this way, the retraction movement or the extension movement of the head assembly 10 and the body assembly 20 is more stable, jamming and stuttering are avoided, and mute effect is enhanced.

The "shaft sleeve-type sliding pair" herein uses a shaft that provides a guide function as a cooperation basis, and a sliding sleeve that is adapted to the shaft may be implemented in different structural manners. For example, the "shaft sleeve-type sliding pair" in this embodiment includes but is not limited to a body shaft 32 and a sliding sleeve 211 that are adapted to each other. The body shaft 32 is disposed on a base body 31 of the base assembly 30, and the sliding sleeve 211 is disposed on a body 21 of the body assembly 20.

Or in another specific implementation, the body shaft and the sliding sleeve may be disposed interchangeably (not shown in the figure). To be specific, the body shaft is disposed on the body, and the sliding sleeve is correspondingly disposed on the base body. In this way, the body can move relative to the base body as well to form a "shaft sleeve-type sliding pair" together.

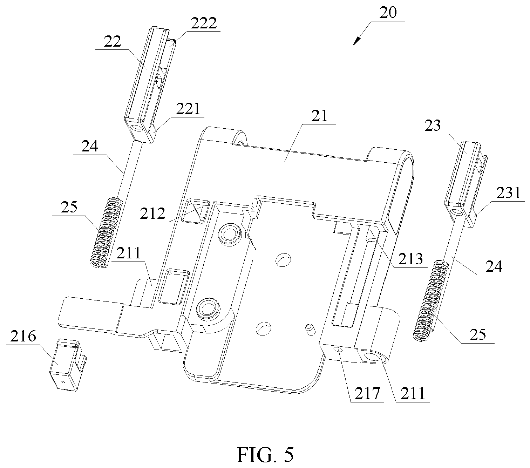

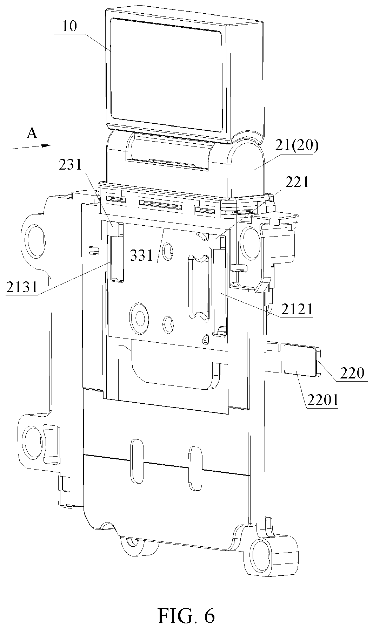

Refer to FIG. 5 and FIG. 6. FIG. 5 is an exploded view of assembly of a body assembly according to this embodiment. FIG. 6 is a schematic diagram of a transition state of a telescopic rotary camera module according to this embodiment.

As shown in FIG. 5, the body assembly 20 includes a first sliding block 22 slidably adapted to the body 21, and the body 21 has a first accommodating cavity 212 adapted to the first sliding block 22. A length of the first accommodating cavity 212 herein at least includes a sliding stroke of the first sliding block 22, and the first accommodating cavity 212 is disposed in parallel with the two groups of shaft sleeve-type sliding pairs. In this way, due to a limitation of the first accommodating cavity 212, when the body assembly 20 drives the head assembly 10 to extend outward, the first sliding block 22 disposed in the first accommodating cavity 212 may maintain relatively high sliding movement accuracy.

In this embodiment, the first sliding block 22 includes a first stop part 221 and a transmission part 222. The rotating shaft 11 is adapted to the transmission part 222 in a transmission manner. A limiting part 331 adapted to the first stop part 221 is disposed on the base assembly 30, so that the rotating shaft 11 drives the head assembly 10 to rotate.

As shown in FIG. 6, the limiting part 331 may be formed on the base body 31. Relative to the base body 31, when the body 21 extends outward until the first stop part 221 abuts against the limiting part 331, blocked and limited by the limiting part 331, the first sliding block 22 does not continue to extend outward with the body 21, and is in a stopped state. The rotating shaft 11 may still continue to extend outward with the body 21 after the first sliding block 22 stops. Based on a transmission adaptation relationship between the transmission part 222 and the rotating shaft 11, the continuing extension action of the body 21 drives the rotating shaft 11 to follow and rotate. In this case, the head assembly 10 rotates relative to the body 21, and finally reaches the shooting state. The head assembly 10 entirely extends to an outside of the base body 31, and rotates downward a specific angle toward the user. A horizontal shooting angle of view is converted into a slightly downward tilted shooting angle of view, for example, including but not limited to, an angle that can implement full coverage for the to-be-shot object on a desktop.

Further, to improve stability of the retraction, extension and rotation actions, as shown in FIG. 5, in another embodiment, a second sliding block 23 may be additionally disposed on the body assembly 20, to jointly perform bearing with the first sliding block 22, implementing force balance.

The body 21 has a second accommodating cavity 213 adapted to the second sliding block 23. Similarly, a length of the second accommodating cavity 213 at least includes a sliding stroke of the second sliding block 23, and the second accommodating cavity 213 and the first accommodating cavity 212 are disposed in parallel.

The second sliding block 23 includes a second stop part 231 that is adapted to the limiting part 331. When the body 21 extends outward until the second stop part 231 abuts against the limiting part 331, both the second sliding block 23 and the first sliding block 22 are in the stopped state, as shown in FIG. 6.

In a specific implementation, the first stop part 221 and the second stop part 231 may be independently processed with the corresponding sliding blocks, and then assembled. Preferably, the first stop part 221 may be integrated with a body of the first sliding block 22, and the second stop part 231 may also be integrated with a body of the second sliding block 23. As shown in FIG. 5, the first stop part 221 is a protrusion formed by extending from the body of the first sliding block 22, and the second stop part 231 is a protrusion formed by extending from the body of the second sliding block 23.

A first guide groove 2121 is provided on a wall surface of the first accommodating cavity 212. The first stop part 221 extends from the first guide groove 2121, and cooperates with the limiting part 331 to complete a limiting and stopping function. A second guide groove 2131 is provided on a wall surface of the second accommodating cavity 213. The second stop part 221 extends from the second guide groove 2131, and cooperates with the limiting part 331 to complete the limiting and stopping function.

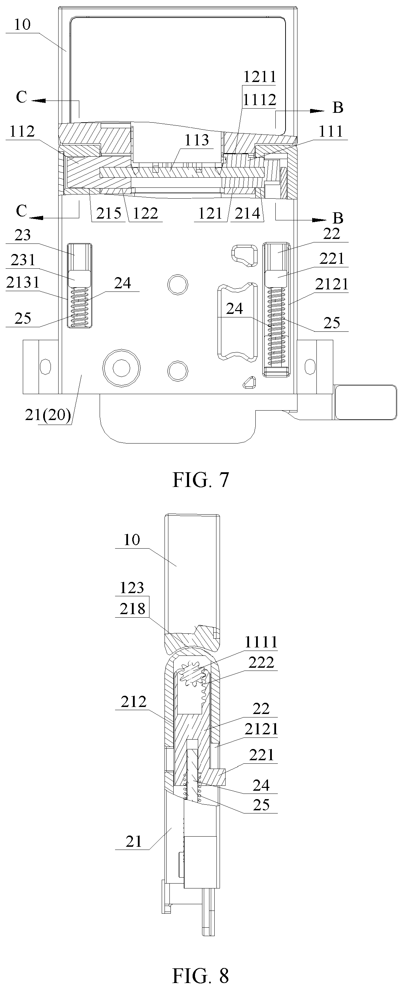

Refer to FIG. 7, FIG. 8, and FIG. 9. FIG. 7 is a schematic diagram of an assembly relationship between the head assembly and the body assembly in a direction A shown in FIG. 6.

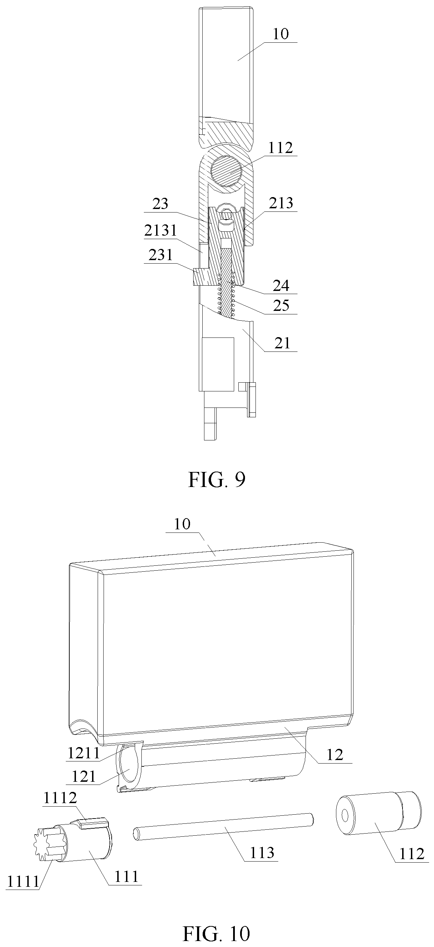

FIG. 8 is a sectional view formed at a cutting position B-B shown in FIG. 7. FIG. 9 is a sectional view formed at a cutting position C-C shown in FIG. 7.

A length of each of the first guide groove 2121 and the second guide groove 2131 only needs to meet a displacement stroke requirement of the corresponding sliding block. In other words, after the first sliding block 22 and the second sliding block 23 stop, in a process in which the body 21 continues to extend outward until the head assembly rotates into the final state, the length of each of the first guide groove 2121 and the second guide groove 2131 meets a displacement stroke requirement of the stop part. In this way, when the body 21 continues to extend outward, the two stopped sliding blocks are slidably adapted to the corresponding accommodating cavities synchronously. This ensures a reliable force balance and avoids force tilt or stuttering caused by sliding adaptation of a unilateral sliding block.

In this embodiment, the rotating shaft 11 adopts a split design. Refer to FIG. 10. The rotating shaft 11 includes a first rotating shaft 111 and a second rotating shaft 112, to establish the foregoing hinged relationship. The split design can lower a processing accuracy requirement and difficulty of the rotating shaft, and has relatively good processing and assembly technology.

The first rotating shaft 111 and the second rotating shaft 112 are disposed in corresponding shaft holes on the body 21 and a housing 12 of the head assembly 10. As shown in FIG. 7, the housing 12 of the head assembly 10 has a first shaft hole 121 and a second shaft hole 122 that are coaxially provided at an interval, and the body 21 has a third shaft hole 214 and a fourth shaft hole 215 that are coaxially provided at an interval. Two ends of the first rotating shaft 111 are respectively inserted into the first shaft hole 121 and the third shaft hole 214, and two ends of the second rotating shaft 112 are respectively inserted into the second shaft hole 122 and the fourth shaft hole 215.

For example, each of the first rotating shaft 111 and the second rotating shaft 112 shown in the figure preferably uses a variable-section shaft. To be specific, a hinged adaptive shaft section and a non-adaptive shaft section are designed with non-uniform diameters. This reduces a size and a length of the hinged adaptive shaft section and further reduces processing costs. This case does not constitute a limitation. It may be understood that, based on associated structure design requirements of different products, each of the first rotating shaft 111 and the second rotating shaft 112 may alternatively use an equal-section shaft.

In this embodiment, the first rotating shaft 111 is configured to be adapted to the transmission part 222 of the first sliding block 22 in a transmission manner. The transmission adaptation relationship may be implemented by using a gear-rack transmission mechanism. As shown in FIG. 8, the transmission part 222 of the first sliding block 22 is a rack, and the first rotating shaft 111 has a gear 1111 that meshes with the rack. In addition, the first rotating shaft 111 and the first shaft hole 121 synchronously rotate by using a key connection structure, implementing a function in which the first rotating shaft 111 drives the head assembly 10 to rotate synchronously.

The key connection structure herein may have different structure implementations. For example, the structure implementations include but are not limited to that shown in FIG. 10. A radially formed protrusion 1112 is on an outer circumferential surface of the first rotating shaft 111 in this embodiment. As shown in FIG. 7 and FIG. 10, a radially formed groove 1211 is correspondingly provided on a hole wall of the first shaft hole 121. After assembly, the protrusion 1112 and the groove 1211 form a key connection structure, so that the first rotating shaft 111 drives the head assembly to rotate synchronously.

In this disposition, when the body 21 drives the head assembly 10 to extend into the transition state, and the first sliding block 22 and the second sliding block 23 stop and cannot continue to extend outward, the gear 1111 meshing with the rack may still extend outward with the body 21. In other words, the gear and rack cannot maintain a synchronous extended state, forming a differential motion. In this case, the stopped rack may form a tangential force acting on the gear 1111, so that the gear 1111 continues to extend outward and rotate, to drive the head assembly 10 to rotate until the head assembly 10 rotates to an angle position required for a shooting function and the shooting state is reached.

In a specific implementation, the key connection structure may alternatively be implemented by using a spline, or two convex rib structures that are circumferentially symmetrically disposed.

In another specific implementation, the key connection structure may alternatively use the following structure. The gear 1111 and the first rotating shaft 111 are designed with a prismatic and a hole structure in which axial end surfaces are adapted to each other.

In addition, it should be noted that, in another specific implementation, the transmission adaptation relationship between the first rotating shaft 111 and the transmission part 222 of the first sliding block 22 may alternatively be implemented by using a structure form different from that of the gear-rack meshing mechanism, for example, including but not limited to by using a cam guide mechanism formed by a protrusion and an arc groove.

To improve an overall bearing capacity of the rotating shaft 11, the rotating shaft 11 in this embodiment further includes a rotating shaft connecting rod 113. Two ends of the rotating shaft connecting rod 113 are respectively fastened to the first rotating shaft 111 and the second rotating shaft 112.

In a specific implementation, the fixedly connected structure may be bonded and fastened by using a shaft hole structure. Alternatively, the rotating shaft connecting rod 113 is designed with a prism, and cooperates with an adaptive prismatic hole on an end surface of each of the first rotating shaft 111 and the second rotating shaft 112.

When a radial load under the hinged relationship is excessively large during use, the rotating shaft connecting rod 113 and a rotating shaft on the other side jointly perform bearing, to avoid abnormal stuttering. In addition, the first rotating shaft 111 and the second rotating shaft 112 may be pre-assembled by using the rotating shaft connecting rod 113, and then assembled with the head assembly 10 and the body 21. An assembly technology is relatively good. The following problems are likely to occur in an integrated shaft structure: An assembled size chain is relatively long, an accuracy requirement for each part is extremely high, insufficient concentricity leads to jamming, and an actual rotation angle is different from a theoretical design. After the rotating shaft 11 in this embodiment adopts the split design, costs and a manufacturing technology can be effectively reduced, jamming can be avoided, and movement accuracy can be ensured more easily.

In the rotation process of the head assembly 10, when the rotating shaft 11 (the first rotating shaft 111) adapted to the stopped transmission part (the rack) rotates, the gear 1111 in the rotation process generates a reaction force on the first sliding block 22. When the reaction force is abnormal, movement accuracy of the body 21 extending outward or retracting inward is affected. To further improve stability of sliding movements between both the first sliding block 22 and the second sliding block 23, and the body 21, in this embodiment, the first accommodating cavity 212 adapted to the first sliding block 22 may at least partially wrap the first sliding block 22 in a circumferential direction. Similarly, the second accommodating cavity 213 adapted to the second sliding block 23 on the other side may also at least partially wrap the second sliding block 23 in a circumferential direction.

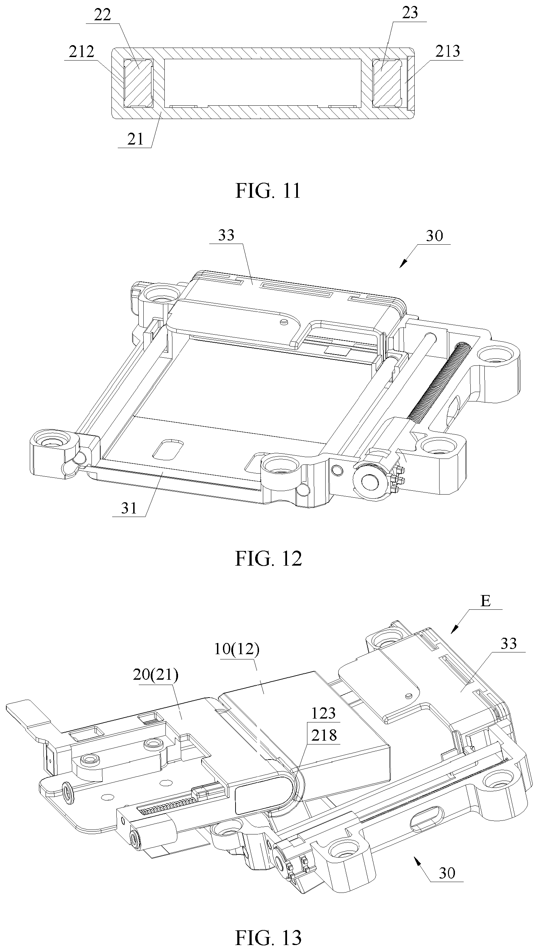

Refer to FIG. 8 and FIG. 11. With a constraint of wrapping the first sliding block 22 in the circumferential direction by the first accommodating cavity 212, the first sliding block 22 may maintain a relative position tolerance relative to the first rotating shaft 111, causing no deflection. As shown in FIG. 9 and FIG. 11, together with the foregoing constraint, another constraint of wrapping the second sliding block 23 in the circumferential direction by the second accommodating cavity 213 jointly forms a reliable association and cooperation relationship by using the body 21 as a basic structure. In this embodiment, the first accommodating cavity 212 and the second accommodating cavity 213 form the circumferentially wrapped parts that are located on the body 21 near a hinged position.

In another specific implementation, the first accommodating cavity 212 and the second accommodating cavity 213 may be designed as an entirety that wraps the corresponding sliding block in a circumferential direction. Alternatively, the first accommodating cavity 212 and the second accommodating cavity 213 may be designed to discontinuously wrap the corresponding sliding block in a hollow-out manner.

In addition, this embodiment further provides a guide function for the first sliding block 22 and the second sliding block 23.

As shown in FIG. 5, a sliding block shaft 24 is disposed in each of the first accommodating cavity 212 and the second accommodating cavity 213 of the body 21. One end that is of the sliding block shaft 24 and that is away from the head assembly 10 is fixedly disposed, and the other end of the sliding block shaft 24 is mounted on the corresponding first sliding block 22 and second sliding block 23, establishing a sliding adaptation relationship.

Two body shafts 32 are parallel to two sliding block shafts 24. When the first sliding block 22 and the second sliding block 23 stop, and the body 21 continues to extend outward, the sliding block shafts 24 follow and extend into the corresponding first sliding block 22 and second sliding block 23. This dynamic cooperation relationship can further help the body 21 achieve good movement stability.

In this embodiment, the two sliding block shafts 24 are fastened in different manners. As shown in FIG. 5, for the sliding block shaft 24 adapted to the first sliding block 22, one shaft base 216 is inserted and fastened to an end of the first accommodating cavity 212, and the sliding block shaft 24 is fastened to the shaft base 216. For the sliding block shaft 24 adapted to the second sliding block 23, a mounting hole 217 is formed on an end body of the second accommodating cavity 213, and the sliding block shaft 24 is fastened to the mounting hole 217. In another specific implementation, the two sliding block shafts 24 may be fastened in a same manner.

As shown in FIG. 7 to FIG. 9, to control a rotational speed of the head assembly 10 at a retraction moment, a sliding block elastic component 25 is sleeved on each of the sliding block shafts 24, two ends of the sliding block elastic component 25 that is disposed in the first accommodating cavity 212 respectively press against the shaft base 216 and the first sliding block 22, and two ends of the sliding block elastic component 25 that is disposed in the second accommodating cavity 213 press against the second sliding block 23 and a bottom body of the accommodating cavity. When the first sliding block 22 and the second sliding block 23 stop, and the body 21 continues to extend outward, the two sliding block elastic components 25 each may deform and store energy.

In this disposition, when the camera is to be retracted, driven by a driving mechanism 50, the body assembly 20 drives the head assembly 10 to retract inward. The two sliding block elastic components 25 gradually release energy stored due to deformity. The sliding block matins a static state at an initial retraction moment, and applies a reverse tangential force on the gear 1111 of the first rotating shaft 111. In this case, the gear 1111 starts to rotate reversely, and drives the head assembly 10 to rotate reversely until the head assembly 10 retracts into the base body 31. In this case, the two sliding block elastic components 25 are restored to an uncompressed state.

In another specific implementation, both the two body shafts 32 are located on an outer side of the corresponding sliding block shafts 24, and two sides of the body 21 protrude to form the sliding sleeve 211 adapted to the sliding block shaft 24. Therefore, two groups of sliding adaptation relationships are approximately arranged in one plane, reducing space occupied by an electronic device in a thickness direction.

For example, a shaft sleeve made of a self-lubricating material may be disposed in the sliding sleeve 211, and a clearance between the body shaft 32 and the shaft sleeve is relatively small during assembly. This case does not constitute a limitation. In the retraction process and extension process, a friction resistance between the shaft and the shaft sleeve is relatively small, and the camera is not likely to tilt, so that stability of the retraction and extension movements can be ensured to a maximum extent.

FIG. 12 is a schematic diagram of an overall structure of a base assembly according to Embodiment 1.

In this embodiment, the base assembly 30 further includes a guide sleeve 33 that is disposed on the base body 31, to form a channel for the camera to extend outward. Specifically, the head assembly 10 and a part of the body 20 may extend from the guide sleeve 33. As shown in FIG. 13, during product assembly, the head assembly 10 and the body assembly 20 are assembled together and then inserted into the guide sleeve 33 of the base assembly 30.

To simplify a structure of the base body 31, the limiting part 331 is formed on an inner end surface of the guide sleeve 33. The inner end surface of the guide sleeve 33 is adapted to the stop parts on the two sliding blocks, to stop the sliding block in the transition state.

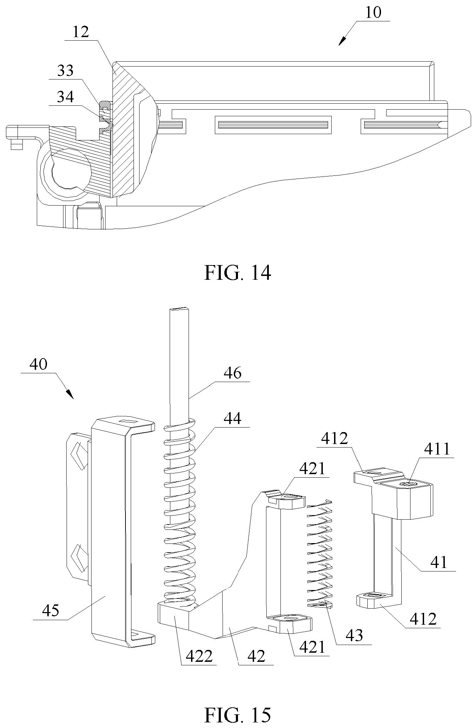

Specifically, a cross section of the housing 12 of the head assembly 10 is consistent with a cross section of at least a part of the body 21, and is adapted to an inner wall of the guide sleeve 33. In other words, the housing 12 of the head assembly 10 is adapted to the inner wall of the guide sleeve 33, and the at least a part of the body 21 is also adapted to the inner wall of the guide sleeve 33. FIG. 14 is a partial sectional view of an assembly relationship of a guide sleeve shown at E in FIG. 13.

In this embodiment, a channel of retraction and extension corresponds with the head assembly 10 in size. For the head assembly 10 with a specific size, only a relatively small opening needs to be provided for an electronic device to which the camera module is applied. This can reduce space occupied by the opening on the electronic device while meeting retraction, extension and rotation functions of the camera.

It may be understood that, the at least a part of the body 21 that is consistent with the cross section of the housing 12 is a part of the body 21 near the hinged position, and is adapted to the inner wall of the guide sleeve 33 in an extension operation or a retraction operation.

In addition, a sealing component 34 is disposed on an inner wall at an outlet side of the guide sleeve 33.

In a specific implementation, the sealing component 34 may be made of soft silicone rubber. Specifically, the sealing component 34 is integrated with the housing 12 of the head assembly 10 by using a liquid silicone rubber injection molding technology. When the head assembly 10 is in the retracted state, the housing 12 of the head assembly 10 is in interference fit with the sealing component 34 to implement sealing effect. When the head assembly 10 is in the extended state, the body 21 is in interference fit with the sealing component 34 to implement sealing effect. In addition, in the retraction process or extension process, the sealing component 34 may always abut against an outer circumferential surface of the head assembly 10 and an outer circumferential surface of the body 21 that is adapted to the inner wall of the guide sleeve 33 and maintain a sealed state, having relatively good waterproof and dust-proof effect.

To prevent a foreign matter from falling into the hinged position between the head assembly 10 and the body 21, a mating surface between the head assembly 10 and the body 21 may be further optimized. In this embodiment, a mating surface 123 that is of the housing 12 of the head assembly 10 and that is contacted with the body 21 is an inwardly concave arc surface, and a mating surface 218 that is of the body 21 and that is contacted with the housing 12 of the head assembly 10 is an outwardly convex arc surface. The outwardly convex arc surface is adapted to the inwardly concave arc surface. Refer to FIG. 4. A fitting clearance between the head assembly 10 and the body 21 may be controlled to be relatively small. In addition, when the head assembly 10 rotates relative to the body 21, a fitting clearance between the mating surfaces remains unchanged, to prevent the foreign matter from entering a joint position between the head assembly 10 and the body assembly 20.

As shown in FIG. 4, in this embodiment, the driving mechanism 50 that provides a retractable driving force is disposed on the base assembly 30, and uses a connecting rod assembly 40 as the transmission mechanism to drive the body 21 to move. The driving mechanism 50 includes a motor 51 and a lead screw 53. The motor 51 is fastened to the base body 31. One end of the lead screw 53 is connected to an output end of the motor 51 in a transmission manner, and the other end is pivotally connected to the base body 31 by using a bearing. In addition, the lead screw is adapted to a screw nut 411 of the connecting rod assembly 40. In this case, a rotating driving force that is output by the motor 51 is converted into a linear driving force, to drive the body 21 to extend outward or retract inward.

Preferably, the output end of the motor 51 may be connected to the lead screw 53 in a transmission manner by using a reducer box 52. In another specific implementation, a gear motor may be alternatively used.

FIG. 15 is an exploded view of assembly of a connecting rod assembly. The connecting rod assembly 40 specifically includes two connecting rods and two connecting rod elastic components, to provide a double buffer protection function.

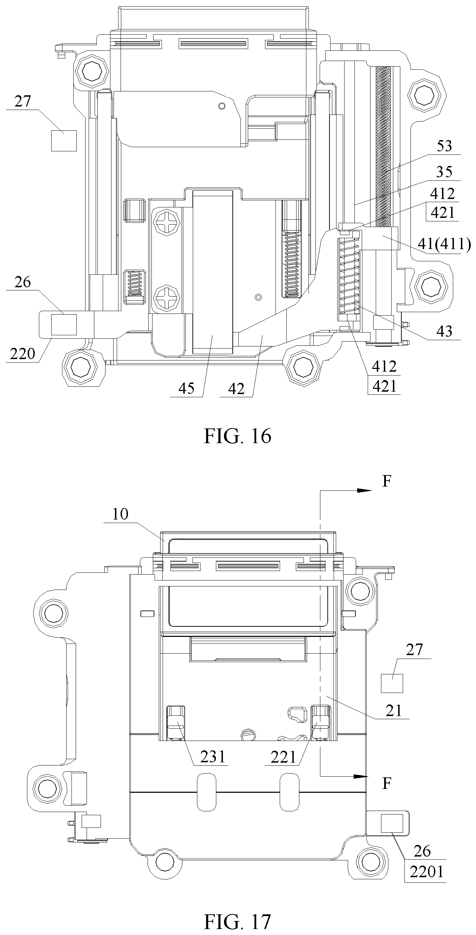

A first connecting rod 41 is connected to the driving mechanism 50 in a transmission manner. Specifically, FIG. 16 is a schematic diagram of an assembly relationship of the connecting rod assembly. The first connecting rod 41 is connected to the lead screw 53 in a transmission manner by using the screw nut 411 that is embedded in the first connecting rod 41. The second connecting rod 42 is connected to the first connecting rod 41 in a transmission manner. The first connecting rod elastic component 43 is pre-compressed and disposed between the first connecting rod 41 and the second connecting rod 42. The second connecting rod elastic component 44 is pre-compressed and disposed between the second connecting rod 42 and a connecting rod base 45. The connecting rod base 45 is disposed on the body 21.

Specifically, when the body 21 extends outward, the first connecting rod 41 drives the second connecting rod 42 by using the first connecting rod elastic component 43. The second connecting rod 42 drives the connecting rod base 45 by using the second connecting rod elastic component 44. In this case, a driving force for driving the body 21 to extend outward is transferred when the motor 51 rotates forward.

The connecting rod assembly 40 herein further includes a connecting rod shaft that is configured to mount the connecting rod elastic component, to improve working stability of the connecting rod elastic component.

Two first connecting shaft sleeves 412 are disposed at end parts that are of the first connecting rod 41 and that are connected to the second connecting rod 42. Two second connecting shaft sleeves 421 are disposed at end parts that are of the second connecting rod 42 and that are connected to the first connecting rod 41. As shown in FIG. 16, a first connecting rod shaft 35 on which the first connecting rod elastic component 43 is sleeved is disposed on the base body 31.

The two first connecting shaft sleeves 412 respectively abut against the two second connecting shaft sleeves 421. Two ends of the first connecting rod shaft 35 respectively pass through the two groups of the first connecting shaft sleeves 412 and the second connecting shaft sleeves 421 that abut against each other, and are fastened to the base assembly 30. Specifically, a bottom surface of the first connecting shaft sleeve 412 located above abuts against a top surface of the second connecting shaft sleeve 421 located above. A bottom surface of the first connecting shaft sleeve 412 located below abuts against a top surface of the second connecting shaft sleeve 421 located below. In this case, a driving force for driving the body 21 to retract inward is transferred when the motor 51 rotates reversely.

It may be understood that, in another specific implementation, only the first connecting shaft sleeve 412 located below is disposed on the first connecting rod 41, and a bidirectional power transfer function may also be implemented. In comparison, the two first connecting shaft sleeves 412 are used in this embodiment, so that reliability and stability of power transfer between the first connecting rod 41 and the second connecting rod 42 can be improved.

A third connecting shaft sleeve 422 is disposed at an end part that is of the second connecting rod 42 and that is connected to the connecting rod base 45, and the second connecting rod elastic component 44 and the third connecting shaft sleeve 422 are sequentially sleeved on the second connecting rod shaft 46. To be specific, a bottom surface of the third connecting shaft sleeve 422 abuts against a mounting surface of a lower part of the connecting rod base 45, two ends of the second connecting rod elastic component 44 respectively abut against a top surface of the third connecting shaft sleeve 422 and a mounting surface of an upper part of the connecting rod base 45, and two ends of the second connecting rod shaft 46 are fastened to the connecting rod base 45.

In this embodiment, the first connecting rod shaft 35, the second connecting rod shaft 46, the two body shafts 32, and the two sliding block shafts 24 are parallel, and the two body shafts 32 are symmetrically disposed relative to the second connecting rod shaft 46. In this case, the driving force transferred by the connecting rod assembly 40 is close to a middle position of the body 21, so that force applied to the two basic sliding adaptation pairs tends to be consistent, avoiding tilting and stuttering.

In a specific implementation, an inwardly concave mounting surface 219 is provided on the body 21. The connecting rod base 45 is disposed on the inwardly concave mounting surface 219, to reduce space occupation in a thickness direction. As shown in FIG. 15 and FIG. 16, the third connecting shaft sleeve 422 is located on an inner end side of the second connecting rod 42. To be specific, relative to a body of the second connecting rod 42, the third connecting shaft sleeve 422 is located at a lower position shown in the figure. In this case, when the connecting rod assembly 40 is driven upward by the lead screw 53, the second connecting rod 42 does not interfere with the guide sleeve 33. This can achieve relatively high product integration while satisfying the power transfer function of the transmission mechanism, and improve space utilization.

In another specific implementation, the second connecting rod 42, the second connecting rod elastic component 44, and the second connecting rod shaft 46 may alternatively be directly connected to the body 21. In other words, the connecting rod base 45 is not used. In this way, the same double buffer protection function can also be achieved.

As shown in FIG. 17 to FIG. 22, the following briefly describes a working principle of the telescopic rotary camera module in this embodiment.

### I. Camera extension action

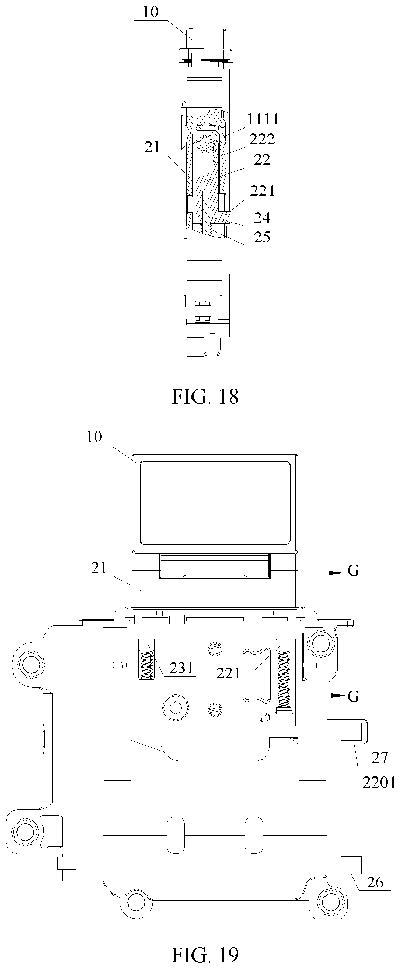

The initial state is shown in FIG. 17 and FIG. 18. After rotation of the motor 51 is decelerated by the reducer box 52, the motor 51 drives the lead screw 53 to rotate, and then rotation is converted into a linear extension movement of the first connecting rod 41 by using the screw nut 411 meshed with the lead screw 53. The first connecting rod 41 transfers power to the second connecting rod 42 by using the first connecting rod elastic component 43. Similarly, the second connecting rod 42 transfers power to the connecting rod base 45 by using the first connecting rod elastic component 43, and pushes the body 21 by using the connecting rod base 45 to drive the head assembly 10 to extend into the transition state.

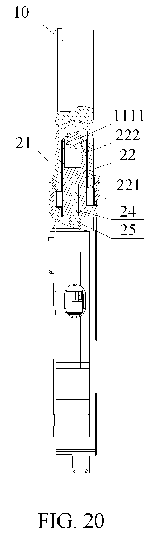

The transition state is shown in FIG. 19 and FIG. 20. When the body 21 drives the head assembly 10 to extend into the transition state, the first stop part 221 on the first sliding block 22 and the second stop part 231 on the second sliding block 23 separately abut against the limiting part 331. In this state, the first sliding block 22 and the second sliding block 23 that are located in the accommodating cavities of the body 21 are synchronously in the stopped state. In addition, the extension movement of the head assembly 10 does not reach a limit position, and the head assembly 10 may continue to extend outward with the rotating shaft 11 under driving of the body 21.

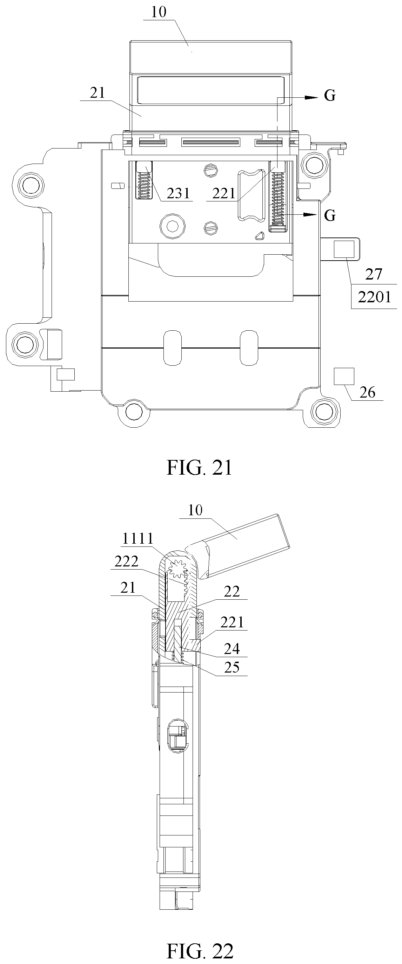

The extended state is shown in FIG. 21 and FIG. 22. The body 21 continues to extend outward, and the gear 1111 of the rotating shaft 11 and the head assembly 10 follow. To be specific, a differential motion is formed between the gear 1111 of the rotating shaft 11 and the rack of the first sliding block 22, and the tangential force acting on the gear 1111 is generated. The gear 1111 starts to rotate and drives the head assembly 10 to rotate into the final shooting state. It may be determined that a movement trajectory of the head assembly 10 changing from the transition state to the shooting state is formed by fitting a linear extension trajectory and a rotation trajectory.

Because the first sliding block 22 and the second sliding block 23 stop, in the process in which the body 21 continues to extend outward, the two sliding block elastic components 25 each may deform and store energy.

### II. Camera retraction action

The motor 51 rotates reversely, and drives the body 21 by using the connecting rod assembly 40, to drive the head assembly 10 to retract inward. The two sliding block elastic components 25 gradually release the energy stored due to deformity. The first sliding block 22 matins the static state at the initial retraction moment, and applies the reverse tangential force on the gear 1111. In this case, the gear 1111 starts to rotate reversely, and drives the head assembly 10 to rotate reversely until the head assembly 10 retracts into the retracted state within the base body 31. In this case, the two sliding block elastic components 25 are restored to the uncompressed state.

Based on the double buffer protection function of the connecting rod assembly 40, when the head assembly 10 is in the extended state, it can be ensured that the camera module is not substantively affected in the following several application scenarios in which force is applied reversely.

Scenario 1: In a normal use state, when the user manually applies force to press the head assembly 10 to temporarily adjust a shooting range, the two connecting rod springs of the connecting rod assembly 40 may be further pressed to adaptively deform, and may be automatically restored to original positions after the external force disappears.

Scenario 2: During falling, impact on the camera module is transferred to the two connecting rod springs of the connecting rod assembly 40, and is absorbed by compressing the springs twice.

To effectively reduce a possibility that the impact is transferred to the lead screw 53 and affects a service life of the driving mechanism 50, rigidity of the pre-compressed first connecting rod elastic component 43 is preferably greater than rigidity of the pre-compressed second connecting rod elastic component 44. In this disposition, when the impact force is generated during falling, the second connecting rod elastic component 44 with relatively small rigidity first deforms and absorbs energy, to reduce the impact force transferred to the first connecting rod elastic component 43, and greatly reduce force applied on the lead screw 52. In addition, transfer of the impact force to the first connecting rod elastic component 43 can be deferred, effectively protecting the lead screw, motor, and reducer box of the driving mechanism 50.

Scenario 3: When the head assembly 10 is pulled reversely, the head assembly 10 may drive the gear 1111 of the rotating shaft 11 to rotate reversely, and the gear 1111 reversely meshes with the rack of the first sliding block 22. Based on a function of the sliding block elastic component 25, the rack of the first sliding block 22 reversely pulls the gear 1111, so that the head assembly 10 drops for a short distance, and the second connecting rod elastic component 44 is compressed. The second connecting rod elastic component 44 is compressed for a short distance, and then the movement is stopped. After the user releases the head assembly, the second connecting rod elastic component 44 springs back, pushes the head assembly 10 to extend outward, and restores the head assembly 10 to the state before it is pulled.

In addition, in another specific implementation, as shown in FIG. 16, a position detection function may be further added to the camera by using two position sensors. Specifically, a first position sensor 26 is configured to detect the body 21 that retracts into the retracted state, and a second position sensor 27 is configured to detect the body 21 that extends into the extended state, to implement a camera position detection function.

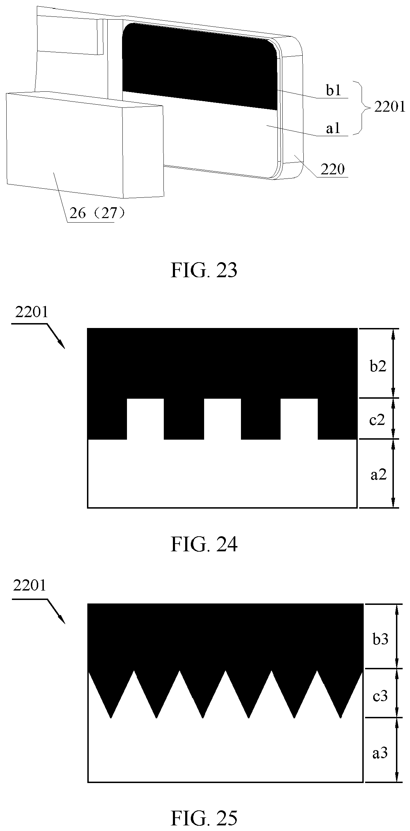

Herein, the first position sensor 26 and the second position sensor 27 may be selected based on different electronic devices. For example, an opto-isolator is used. This case does not constitute a limitation. An input electrical signal drives a light-emitting device (like a light-emitting diode) to emit light of a specific wavelength. The light is received by a light receptor to generate an optical current. After further amplification, a current signal or a voltage signal is output. Because an input and output of the opto-isolator are isolated from each other, electrical signal transmission is unidirectional, and the opto-isolator has a good electrical insulation capability and an anti-interference capability. As shown in FIG. 16 and FIG. 23, the body 21 has a reflective surface 2201 adapted to the opto-isolator. This can accurately determine that the camera is in a retracted position or an extended position. During specific implementation, the first position sensor 26 and the second position sensor 27 may be fastened to a fixed component in the electronic device based on a requirement, for example, including but not limited to, being fastened to a PCB (Printed Circuit Board, printed circuit board) of the electronic device, to directly feed back the output current signal or the voltage signal to a corresponding control unit.

In this solution, a reflective baffle 220 formed through lateral extension is disposed on the body 21, and a reflective surface 2201 is provided on a surface that is of the reflective baffle 220 and that faces the opto-isolator. In other words, the reflective surface 2201 is disposed facing the light-emitting device and the light receiver of the opto-isolator sensor. When the reflective baffle 220 runs, the reflective surface 2201 on the reflective surface 2201 blocks the first position sensor 26 or the second position sensor 27, and the electrical signal is correspondingly generated, to identify and determine that the camera is in the retracted position or the extended position.

For example, the reflective surface 2201 may be formed by sticking a reflective sticker to the reflective baffle 220. This case does not constitute a limitation. The reflective sticker has a simple and reliable structure, and costs are controllable.

In a specific embodiment, the reflective surface 2201 may implement a basic identification and determining function when the reflective sticker is pure white.

In another specific embodiment, the reflective surface is provided with a white reflection region and a black reflection region. As shown in FIG. 23, a joint position between the white reflection region a and the black reflection region b is approximately a straight line. The white reflection region a and the black reflection region b are sequentially provided in retraction and extension directions. In this way, an output variation of the reflective opto-isolator is more intense, and the camera position can be detected more accurately. During use, the opto-isolator detects a color change of the reflective surface and outputs an analog signal. Based on relatively low costs, the opto-isolator can implement accurate position detection. The camera can respond to a slight flip of the user and retract inward, meeting a product design requirement.

In still another specific embodiment, a region between the white reflection region a1 and the black reflection region b1 is a black-and-white mixture reflection region c1. In other words, the region between the black reflection region and the white reflection region is a region with a specific physical distance, and is formed through mixture of black and white. In this way, based on a correspondence between a movement distance of the reflective surface and a voltage change, a voltage change (or a current change) corresponding to the region is relatively slow, high and low level conversion time is accordingly longer, and a running distance of the reflective baffle 220 is accordingly lengthened, that is, a detectable distance is increased.

The "black-and-white mixture reflection region" may be a pattern with a regular variation. Specifically, the black-and-white mixture reflection region is formed by a black tooth shape and a white tooth shape that are alternately configured at intervals. For example, as shown in FIG. 24, a black-and-white mixture reflection region c2 between a white reflection region a2 and a black reflection region b2 is formed by a black triangular tooth and a white triangular tooth. Alternatively, as shown in FIG. 25, a black-and-white mixture reflection region c3 between a white reflection region a3 and a black reflection region b3 is formed by a black triangular tooth and a white triangular tooth. These cases do not constitute a limitation. Certainly, a waveform tooth (not shown in the figure) may alternatively be used.

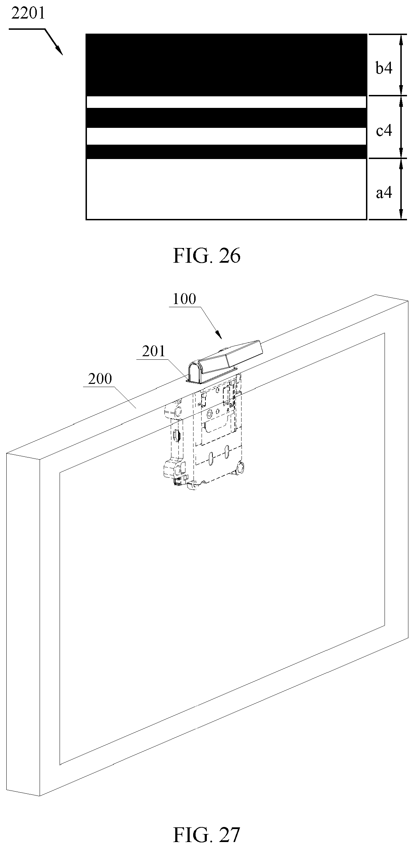

In addition, the "black-and-white mixture reflection region" may alternatively be formed by a black bar and a white bar that are disposed in parallel at intervals. As shown in FIG. 26, in a black-and-white mixture reflection region c4 between a white reflection region a4 and a black reflection region b4, the black bar and the white bar are sequentially disposed at intervals.

In addition, the "black-and-white mixture reflection region" may be a pattern with an irregular variation, provided that the black reflection area and the white reflection area are in a changing state in the region, so that a function requirement of generating a gradually changing voltage signal by the opto-isolator falls within the protection scope of this application.

The position detection function formed based on the foregoing two sensors may be applied to the following application scenario as required.

### Scenario 4:

When the user performs power-on/power-off operations, a corresponding determining logic is as follows.
1. If it is detected that the first position sensor 26 (a lower opto-isolator) is blocked, a system camera is in the initial state.
2. If it is detected that the first position sensor 26 (the lower opto-isolator) is not blocked, the system sends a retraction instruction. Driven by the driving mechanism 50, the reflective baffle 220 located on the body 21 moves to a position at which the first position sensor 26 is blocked, and the system determines that the camera is in the initial state. This can ensure that the camera returns to an initial position.

### Scenario 5:

When the user uses a software service related to a raising/lowering mechanism, a corresponding determining logic is as follows.

Based on scenario 1 in which the system determines that the camera is in the initial state when the system is powered on, the system sends an extension instruction. After an extension action is completed under the driving of the driving mechanism 50, whether the second position sensor 27 (an upper opto-isolator) is blocked is detected, to determine whether the camera reaches a specified position.
1. If it is detected that the second position sensor 27 (the upper opto-isolator) is blocked, it is determined that the camera is in the specified position in the extended state.
2. If it is detected that the second position sensor 27 (the upper opto-isolator) is not blocked, the extension instruction continues to be sent. If preset movement threshold time is exceeded, it is determined that the mechanism is blocked, and a retraction instruction is sent. The camera retracts into the initial state under the driving of the driving mechanism 50.

### Scenario 6:

After the camera extends to the specified position, when the entire device is in an unstable state, for example, including but not limited to, when the entire device tilts and shakes or even falls as described in the scenario 2, or when the user pulls the head assembly 10 as described in scenario 3, a corresponding determining logic is as follows.

After the camera extends to the specified position, the second position sensor 27 (the upper opto-isolator) is blocked by the reflective baffle 220. In this case, the second position sensor 27 (the upper opto-isolator) feeds back a voltage value (or a current value), and uses the voltage value (or the current value) as a reference value. If it is detected that the voltage value (or the current value) changes by a specific percentage, it is determined that the camera has a retraction action, the retraction instruction is sent, and the camera retracts into the initial state under the driving of the driving mechanism 50. Therefore, a function of protecting the raising/lowering can be implemented.

### Embodiment 2

Refer to FIG. 27. An electronic device includes the telescopic rotary camera module 100 described in FIG. 1 to FIG. 26. The electronic device may be a learning machine, a smart television, a notebook computer, a display, or a like product. As shown in the figure, a housing 200 of the electronic device has an opening 201 for a head assembly to retract or extend.

It may be determined that another functional composition of the electronic device is not a core invention opinion of this application. Therefore, details are not described in this specification.

### Embodiment 3

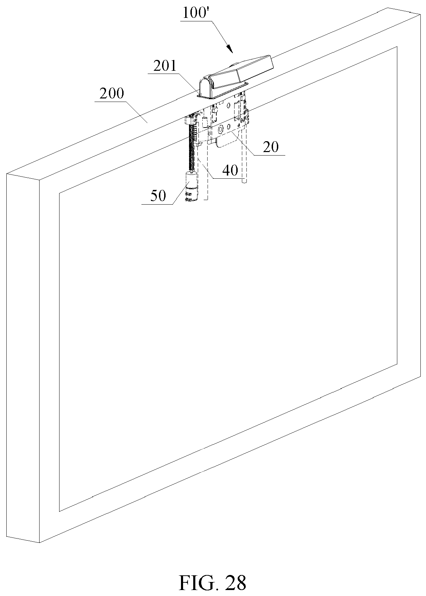

Refer to FIG. 28. An electronic device includes a telescopic rotary camera module 100'. Compared with the telescopic rotary camera module 100 described in FIG. 1 to FIG. 26, a difference of the telescopic rotary camera module 100' in this embodiment lies in that a base body is removed. An association adaptation structure for the base body, a body assembly 20, a connecting rod assembly 40, and a driving mechanism 50 may be disposed on a housing 200 of the electronic device.

In a specific implementation, the association adaptation structure may be formed on the housing 200 directly, or may be partially or entirely formed on the housing 200 indirectly by using an auxiliary base. The electronic device may be a learning machine, a smart television, a notebook computer, a display, or a like product. As shown in the figure, the housing 200 of the electronic device has an opening 201 for a head assembly to retract or extend.

Similarly, another functional composition of the electronic device is not a core invention opinion of this application. Therefore, details are not described in this specification.

The above are merely preferred implementations of the present invention. It should be noted that a person skilled in the art may further make some improvements and refinements without departing from the principles of the present invention, and these improvements and refinements shall fall within the protection scope of the present invention.

## Claims

1. A telescopic rotary camera module, comprising a head assembly, a body assembly, and a base assembly, wherein a camera is disposed on the head assembly; **characterised in that**
the head assembly is hinged to the body assembly by using a rotating shaft, the body assembly is connected to the base assembly by using two groups of shaft sleeve-type sliding pairs, and the two groups of shaft sleeve-type sliding pairs are disposed in parallel;
the body assembly comprises a body and a first sliding block, the body has a first accommodating cavity adapted to the first sliding block, and the first accommodating cavity is disposed in parallel with the two groups of shaft sleeve-type sliding pairs;
the first sliding block comprises a first stop part and a transmission part, the transmission part is adapted to the rotating shaft in a transmission manner, and a limiting part is disposed on the base assembly; and
the body is driven by a driving mechanism, and drives the head assembly to retract inward or extend outward relative to the base assembly; and when the body extends outward until the first stop part abuts against the limiting part, the first sliding block stops, and the body continues to extend to drive the rotating shaft to follow and rotate, so that the head assembly rotates relative to the body.

2. The telescopic rotary camera module according to claim 1, wherein the body assembly further comprises a second sliding block, the body has a second accommodating cavity adapted to the second sliding block, and the second accommodating cavity is disposed in parallel with the first accommodating cavity; and
the second sliding block comprises a second stop part adapted to the limiting part, and when the body extends outward until the second stop part abuts against the limiting part, the second sliding block stops.

3. The telescopic rotary camera module according to claim 2, wherein at least a part of the first accommodating cavity wraps the first sliding block in a circumferential direction, and at least a part of the second accommodating cavity wraps the second sliding block in a circumferential direction.

4. The telescopic rotary camera module according to claim 2 or 3, wherein the shaft sleeve-type sliding pair comprises a body shaft and a sliding sleeve that are adapted to each other and that are respectively disposed on the base assembly and the body.

5. The telescopic rotary camera module according to any one of claims 2 to 4, wherein a sliding block shaft is disposed in each of the first accommodating cavity and the second accommodating cavity, one end that is of the sliding block shaft and that is away from the head assembly is fixedly disposed, and the other end is mounted in each of the corresponding first sliding block and the second sliding block; each sliding block shaft is sleeved with a sliding block elastic component that is configured to deform and store energy after each of the corresponding first sliding block and second sliding block stops; and the body shaft is parallel to the sliding block shaft.

6. The telescopic rotary camera module according to any one of claims 2 to 5, wherein the first stop part is a protrusion formed by extending from a body of the first sliding block, a first guide groove is provided on a wall surface of the first accommodating cavity, and the first stop part extends from the first guide groove; and the second stop part is a protrusion formed by extending from a body of the second sliding block, a second guide groove is provided on a wall surface of the second accommodating cavity, and the second stop part extends from the second guide groove.

7. The telescopic rotary camera module according to any one of claims 1 to 6, wherein the rotating shaft comprises a first rotating shaft and a second rotating shaft;
the head assembly comprises a housing, the housing has a first shaft hole and a second shaft hole that are coaxially provided at an interval, the body has a third shaft hole and a fourth shaft hole that are coaxially provided at an interval, two ends of the first rotating shaft are respectively inserted into the first shaft hole and the third shaft hole, and two ends of the second rotating shaft are respectively inserted into the second shaft hole and the fourth shaft hole; and
the first rotating shaft is adapted to the transmission part in a transmission manner, and the first rotating shaft is circumferentially fastened to the first shaft hole.

8. The telescopic rotary camera module according to claim 7, wherein the rotating shaft further comprises a rotating shaft connecting rod, and two ends of the rotating shaft connecting rod are respectively fastened to the first rotating shaft and the second rotating shaft.

9. The telescopic rotary camera module according to claim 7 or 8, wherein the transmission part is a rack, and the first rotating shaft has a gear meshing with the rack.

10. The telescopic rotary camera module according to any one of claims 1 to 9, wherein the base assembly comprises a base body and a guide sleeve, the head assembly and a part of the body may extend from the guide sleeve, the housing of the head assembly is adapted to an inner wall of the guide sleeve, and at least a part of the body is adapted to the inner wall of the guide sleeve; and
the limiting part is formed on an inner end surface of the guide sleeve.

11. The telescopic rotary camera module according to claim 10, wherein a mating surface that is of the housing of the head assembly and that is contacted with the body is an inwardly concave arc surface, a mating surface that is of the body and that is contacted with the housing of the head assembly is an outwardly convex arc surface, and the outwardly convex arc surface is adapted to the inwardly concave arc surface.

12. The telescopic rotary camera module according to claim 10 or 11, wherein a sealing component is disposed on an inner wall at an outlet side of the guide sleeve.

13. The telescopic rotary camera module according to claim 5, wherein the body is connected to the driving mechanism by using a connecting rod assembly, and the connecting rod assembly comprises a first connecting rod, a second connecting rod, a first connecting rod elastic component, and a second connecting rod elastic component;
the first connecting rod is connected to the driving mechanism, and the second connecting rod is connected to the first connecting rod; and
the pre-compressed first connecting rod elastic component is disposed between the first connecting rod and the second connecting rod, and the pre-compressed second connecting rod elastic component is disposed between the second connecting rod and the body; and a configuration is as follows: when the body extends outward, the first connecting rod drives the second connecting rod by using the first connecting rod elastic component, and the second connecting rod drives the body by using the second connecting rod elastic component.

14. The telescopic rotary camera module according to claim 13, wherein the connecting rod assembly further comprises a connecting rod base, a first connecting rod shaft, and a second connecting rod shaft;
two first connecting shaft sleeves are disposed at end parts that are of the first connecting rod and that are connected to the second connecting rod, two second connecting shaft sleeves are disposed at end parts that are of the second connecting rod and that are connected to the first connecting rod, and the two first connecting shaft sleeves respectively abut against the two second connecting shaft sleeves;
the first connecting rod elastic component is sleeved on the first connecting rod shaft; and two ends of the first connecting rod shaft respectively pass through the two groups of the first connecting shaft sleeves and the second connecting shaft sleeves that abut against each other, and are fastened to the base assembly;
a third connecting shaft sleeve is disposed at an end part that is of the second connecting rod and that is connected to the body, and the connecting rod base is disposed on the body; and
the second connecting rod elastic component and the third connecting shaft sleeve are sequentially sleeved on the second connecting rod shaft, and two ends of the second connecting rod shaft are fastened to the connecting rod base.

15. An electronic device, comprising the telescopic rotary camera module according to any one of claims 1 to 14, wherein a housing of the electronic device has an opening for the head assembly to retract or extend.

## Patentansprüche

1. Teleskopisches Drehkameramodul, umfassend eine Kopfbaugruppe, eine Körperbaugruppe und eine Basisbaugruppe, wobei eine Kamera auf der Kopfbaugruppe angeordnet ist; **dadurch gekennzeichnet, dass** die Kopfbaugruppe unter Verwendung einer Drehwelle an der Körperbaugruppe angelenkt ist, wobei die Körperbaugruppe unter Verwendung von zwei Gruppen von Gleitpaaren vom Welle-Hülse-Typ mit der Basisbaugruppe verbunden ist und die zwei Gruppen von Gleitpaaren vom Welle-Hülse-Typ parallel angeordnet sind;
die Körperbaugruppe einen Körper und einen ersten Gleitblock umfasst, wobei der Körper einen ersten Aufnahmehohlraum umfasst, der an den ersten Gleitblock angepasst ist, und der erste Aufnahmehohlraum parallel zu den zwei Gruppen von Gleitpaaren vom Welle-Hülse-Typ angeordnet ist;
der erste Gleitblock einen ersten Anschlagteil und einen Übertragungsteil umfasst, wobei der Übertragungsteil in einer Übertragungsart an die Drehwelle angepasst ist und ein Begrenzungsteil auf der Basisbaugruppe angeordnet ist; und
der Körper durch einen Antriebsmechanismus angetrieben ist und die Kopfbaugruppe so antreibt, dass sie relativ zu der Basisbaugruppe nach innen einfährt oder nach außen ausfährt; und wobei, wenn der Körper nach außen ausfährt bis der erste Anschlagteil an dem Begrenzungsteil anliegt, der erste Gleitblock anhält und der Körper weiter ausfährt, um die Drehwelle so anzutreiben, dass diese nachfolgt und sich dreht, so dass sich die Kopfbaugruppe relativ zu dem Körper dreht.

2. Teleskopisches Drehkameramodul nach Anspruch 1, wobei die Körperbaugruppe ferner einen zweiten Gleitblock umfasst, wobei der Körper einen zweiten Aufnahmehohlraum aufweist, der an den zweiten Gleitblock angepasst ist, und der zweite Aufnahmehohlraum parallel zu dem ersten Aufnahmehohlraum angeordnet ist; und
wobei der zweite Gleitblock einen zweiten Anschlagteil umfasst, der an den Begrenzungsteil angepasst ist, und wobei, wenn der Körper nach außen ausfährt bis der zweite Anschlagteil an dem Begrenzungsteil anliegt, der zweite Gleitblock anhält.

3. Teleskopisches Drehkameramodul nach Anspruch 2, wobei zumindest ein Teil des ersten Aufnahmehohlraums den ersten Gleitblock in einer Umfangsrichtung umhüllt und zumindest ein Teil des zweiten Aufnahmehohlraums den zweiten Gleitblock in einer Umfangsrichtung umhüllt.

4. Teleskopisches Drehkameramodul nach Anspruch 2 oder 3, wobei das Gleitpaar vom Welle-Hülse-Typ eine Körperwelle und eine Gleithülse umfasst, die aneinander angepasst sind und die jeweils auf der Basisbaugruppe und dem Körper angeordnet sind.

5. Teleskopisches Drehkameramodul nach einem der Ansprüche 2 bis 4, wobei eine Gleitblockwelle in jedem des ersten Aufnahmehohlraums und des zweiten Aufnahmehohlraums angeordnet ist, wobei ein Ende, das zu der Gleitblockwelle gehört und das von der Kopfbaugruppe entfernt ist, fest angeordnet ist und das andere Ende in jedem des entsprechenden ersten Gleitblocks und des zweiten Gleitblocks montiert ist; wobei auf jede Gleitblockwelle eine elastische Gleitblockkomponente aufgeschoben ist, die dazu konfiguriert ist, sich zu verformen und Energie zu speichern, nachdem jeder des entsprechenden ersten Gleitblocks und zweiten Gleitblocks anhält; und wobei die Körperwelle parallel zu der Gleitblockwelle ist.

6. Teleskopisches Drehkameramodul nach einem der Ansprüche 2 bis 5, wobei der erste Anschlagteil ein Vorsprung ist, der durch Ausfahren aus einem Körper des ersten Gleitblocks gebildet ist, wobei eine erste Führungsnut auf einer Wandfläche des ersten Aufnahmehohlraums bereitgestellt ist und der erste Anschlagteil aus der ersten Führungsnut ausfährt; und wobei der zweite Anschlagteil ein Vorsprung ist, der durch Ausfahren aus einem Körper des zweiten Gleitblocks gebildet ist, wobei eine zweite Führungsnut auf einer Wandfläche des zweiten Aufnahmehohlraums bereitgestellt ist und der zweite Anschlagteil aus der zweiten Führungsnut ausfährt.

7. Teleskopisches Drehkameramodul nach einem der Ansprüche 1 bis 6, wobei die Drehwelle eine erste Drehwelle und eine zweite Drehwelle umfasst;
wobei die Kopfbaugruppe ein Gehäuse umfasst, wobei das Gehäuse ein erstes Wellenloch und ein zweites Wellenloch aufweist, die koaxial in einem Intervall bereitgestellt sind, wobei der Körper ein drittes Wellenloch und ein viertes Wellenloch aufweist, die koaxial in einem Intervall bereitgestellt sind, wobei zwei Enden der ersten Drehwelle jeweils in das erste Wellenloch und das dritte Wellenloch eingesetzt sind und zwei Enden der zweiten Drehwelle jeweils in das zweite Wellenloch und das vierte Wellenloch eingesetzt sind; und
wobei die erste Drehwelle in einer Übertragungsart an den Übertragungsteil angepasst ist und die erste Drehwelle umlaufend an dem ersten Wellenloch befestigt ist.

8. Teleskopisches Drehkameramodul nach Anspruch 7, wobei die Drehwelle ferner eine Drehwellenverbindungsstange umfasst und zwei Enden der Drehwellenverbindungsstange jeweils an der ersten Drehwelle und der zweiten Drehwelle befestigt sind.

9. Teleskopisches Drehkameramodul nach Anspruch 7 oder 8, wobei der Übertragungsteil eine Zahnstange ist und die erste Drehwelle ein Zahnrad aufweist, das mit der Zahnstange kämmt.

10. Teleskopisches Drehkameramodul nach einem der Ansprüche 1 bis 9, wobei die Basisbaugruppe einen Basiskörper und eine Führungshülse umfasst, wobei die Kopfbaugruppe und ein Teil des Körpers aus der Führungshülse ausfahren können, wobei das Gehäuse der Kopfbaugruppe an eine Innenwand der Führungshülse angepasst ist und zumindest ein Teil des Körpers an die Innenwand der Führungshülse angepasst ist; und
wobei der Begrenzungsteil auf einer inneren Endfläche der Führungshülse gebildet ist.

11. Teleskopisches Drehkameramodul nach Anspruch 10, wobei eine Passfläche, die zu dem Gehäuse der Kopfbaugruppe gehört und die mit dem Körper in Kontakt steht, eine nach innen konkave Bogenfläche ist, wobei eine Passfläche, die zu dem Körper gehört und die mit dem Gehäuse der Kopfbaugruppe in Kontakt steht, eine nach außen konvexe Bogenfläche ist und die nach außen konvexe Bogenfläche an die nach innen konkave Bogenfläche angepasst ist.

12. Teleskopisches Drehkameramodul nach Anspruch 10 oder 11, wobei eine Dichtungskomponente auf einer Innenwand an einer Auslassseite der Führungshülse angeordnet ist.

13. Teleskopisches Drehkameramodul nach Anspruch 5, wobei der Körper unter Verwendung einer Verbindungsstangenbaugruppe mit dem Antriebsmechanismus verbunden ist und die Verbindungsstangenbaugruppe eine erste Verbindungsstange, eine zweite Verbindungsstange, eine erste elastische Verbindungsstangenkomponente und eine zweite elastische Verbindungsstangenkomponente umfasst;
wobei die erste Verbindungsstange mit dem Antriebsmechanismus verbunden ist und die zweite Verbindungsstange mit der ersten Verbindungsstange verbunden ist; und
wobei die vorverdichtete erste elastische Verbindungsstangenkomponente zwischen der ersten Verbindungsstange und der zweiten Verbindungsstange angeordnet ist und die vorverdichtete zweite elastische Verbindungsstangenkomponente zwischen der zweiten Verbindungsstange und dem Körper angeordnet ist; und wobei eine Konfiguration wie folgt ist: wenn der Körper nach außen ausfährt, treibt die erste Verbindungsstange die zweite Verbindungsstange unter Verwendung der ersten elastischen Verbindungsstangenkomponente an und die zweite Verbindungsstange treibt den Körper unter Verwendung der zweiten elastischen Verbindungsstangenkomponente an.

14. Teleskopisches Drehkameramodul nach Anspruch 13, wobei die Verbindungsstangenbaugruppe ferner eine Verbindungsstangenbasis, eine erste Verbindungsstangenwelle und eine zweite Verbindungsstangenwelle umfasst; wobei zwei erste Verbindungswellenhülsen an Endteilen angeordnet sind, die zu der ersten Verbindungsstange gehören und die mit der zweiten Verbindungsstange verbunden sind, wobei zwei zweite Verbindungswellenhülsen an Endteilen angeordnet sind, die zu der zweiten Verbindungsstange gehören und die mit der ersten Verbindungsstange verbunden sind, und die zwei ersten Verbindungswellenhülsen jeweils an den zwei zweiten Verbindungswellenhülsen anliegen;
wobei die erste elastische Verbindungsstangenkomponente auf die erste Verbindungsstangenwelle aufgeschoben ist; und wobei zwei Enden der ersten Verbindungsstangenwelle jeweils durch die zwei Gruppen der ersten Verbindungswellenhülsen und der zweiten Verbindungswellenhülsen verlaufen, die aneinander anliegen, und an der Basisbaugruppe befestigt sind;
wobei eine dritte Verbindungswellenhülse an einem Endteil angeordnet ist, der zu der zweiten Verbindungsstange gehört und der mit dem Körper verbunden ist, und die Verbindungsstangenbasis auf dem Körper angeordnet ist; und
wobei die zweite elastische Verbindungsstangenkomponente und die dritte Verbindungswellenhülse nacheinander auf die zweite Verbindungsstangenwelle aufgeschoben sind und zwei Enden der zweiten Verbindungsstangenwelle an der Verbindungsstangenbasis befestigt sind.

15. Elektronisches Gerät, umfassend das teleskopische Drehkameramodul nach einem der Ansprüche 1 bis 14, wobei ein Gehäuse des elektronischen Geräts eine Öffnung zum Einfahren oder Ausfahren der Kopfbaugruppe aufweist.

## Revendications

1. Module de caméra rotatif télescopique, comprenant un ensemble de tête, un ensemble de corps, et un ensemble de base, dans lequel une caméra est disposée sur l'ensemble de tête ; **caractérisé en ce que**
l'ensemble de tête est articulé sur l'ensemble de corps en utilisant un arbre rotatif, l'ensemble de corps est relié à l'ensemble de base en utilisant deux groupes de paires coulissantes de type manchon d'arbre, et les deux groupes de paires coulissantes de type manchon d'arbre sont disposés en parallèle ;
l'ensemble de corps comprend un corps et un premier bloc coulissant, le corps a une première cavité de logement adaptée au premier bloc coulissant, et la première cavité de logement est disposée en parallèle avec les deux groupes de paires coulissantes de type manchon d'arbre ;
le premier bloc coulissant comprend une première partie d'arrêt et une partie de transmission, la partie de transmission est adaptée à l'arbre rotatif d'une manière de transmission, et une partie limitatrice est disposée sur l'ensemble de base ; et
le corps est entraîné par un mécanisme d'entraînement, et entraîne l'ensemble de tête pour se rétracter vers l'intérieur ou s'étendre vers l'extérieur relativement à l'ensemble de base ; et, lorsque le corps s'étend vers l'extérieur jusqu'à ce que la première partie d'arrêt vienne en butée contre la partie limitatrice, le premier bloc coulissant s'arrête, et le corps continue de s'étendre pour entraîner l'arbre rotatif pour qu'il suive et entre en rotation, de telle sorte que l'ensemble de tête entre en rotation relativement au corps.

2. Module de caméra rotatif télescopique selon la revendication 1, dans lequel l'ensemble de corps comprend en outre un second bloc coulissant, le corps a une seconde cavité de logement adaptée au second bloc coulissant, et la seconde cavité de logement est disposée en parallèle avec la première cavité de logement ; et
le second bloc coulissant comprend une seconde partie d'arrêt adaptée à la partie limitatrice, et, lorsque le corps s'étend vers l'extérieur jusqu'à ce que la seconde partie d'arrêt vienne en butée contre la partie limitatrice, le second bloc coulissant s'arrête.

3. Module de caméra rotatif télescopique selon la revendication 2, dans lequel au moins une partie de la première cavité de logement entoure le premier bloc coulissant dans une direction circonférentielle, et au moins une partie de la seconde cavité de logement entoure le second bloc coulissant dans une direction circonférentielle.

4. Module de caméra rotatif télescopique selon la revendication 2 ou 3, dans lequel la paire coulissante de type manchon d'arbre comprend un arbre de corps et un manchon coulissant qui sont adaptés l'un à l'autre et qui sont respectivement disposés sur l'ensemble de base et le corps.

5. Module de caméra rotatif télescopique selon l'une quelconque des revendications 2 à 4, dans lequel un arbre de bloc coulissant est disposé dans chacune de la première cavité de logement et de la seconde cavité de logement, une extrémité qui est de l'arbre de bloc coulissant et qui est éloignée de l'ensemble de tête est disposée de façon fixe, et l'autre extrémité est montée dans chacun du premier bloc coulissant et du second bloc coulissant correspondants ; chaque arbre de bloc coulissant est manchonné avec un composant élastique de bloc coulissant qui est configuré pour se déformer et stocker de l'énergie après que chacun du premier bloc coulissant et du second bloc coulissant correspondants s'arrête ; et l'arbre de corps est parallèle à l'arbre de bloc coulissant.

6. Module de caméra rotatif télescopique selon l'une quelconque des revendications 2 à 5, dans lequel la première partie d'arrêt est une saillie formée en s'étendant depuis un corps du premier bloc coulissant, une première rainure de guidage est prévue sur une surface de paroi de la première cavité de logement, et la première partie d'arrêt s'étend depuis la première rainure de guidage ; et la seconde partie d'arrêt est une saillie formée en s'étendant depuis un corps du second bloc coulissant, une seconde rainure de guidage est prévue sur une surface de paroi de la seconde cavité de logement, et la seconde partie d'arrêt s'étend depuis la seconde rainure de guidage.

7. Module de caméra rotatif télescopique selon l'une quelconque des revendications 1 à 6, dans lequel l'arbre rotatif comprend un premier arbre rotatif et un second arbre rotatif ;
l'ensemble de tête comprend un boîtier, le boîtier a un premier trou d'arbre et un deuxième trou d'arbre qui sont prévus coaxialement à un intervalle, le corps a un troisième trou d'arbre et un quatrième trou d'arbre qui sont prévus coaxialement à un intervalle, deux extrémités du premier arbre rotatif sont insérées respectivement dans le premier trou d'arbre et le troisième trou d'arbre, et deux extrémités du second arbre rotatif sont insérées respectivement dans le deuxième trou d'arbre et le quatrième trou d'arbre ; et
le premier arbre rotatif est adapté à la partie de transmission d'une manière de transmission, et le premier arbre rotatif est fixé circonférentiellement au premier trou d'arbre.

8. Module de caméra rotatif télescopique selon la revendication 7, dans lequel l'arbre rotatif comprend en outre une tige de liaison d'arbre rotatif, et deux extrémités de la tige de liaison d'arbre rotatif sont fixées respectivement au premier arbre rotatif et au second arbre rotatif.

9. Module de caméra rotatif télescopique selon la revendication 7 ou 8, dans lequel la partie de transmission est une crémaillère, et le premier arbre rotatif a une pièce d'engrenage s'engrenant avec la crémaillère.

10. Module de caméra rotatif télescopique selon l'une quelconque des revendications 1 à 9, dans lequel l'ensemble de base comprend un corps de base et un manchon de guidage, l'ensemble de tête et une partie du corps peuvent s'étendre depuis le manchon de guidage, le boîtier de l'ensemble de tête est adapté à une paroi intérieure du manchon de guidage, et au moins une partie du corps est adaptée à la paroi intérieure du manchon de guidage ; et
la partie limitatrice est formée sur une surface d'extrémité intérieure du manchon de guidage.

11. Module de caméra rotatif télescopique selon la revendication 10, dans lequel une surface d'accouplement qui est du boîtier de l'ensemble de tête et qui est mise en contact avec le corps est une surface arquée concave vers l'intérieur, une surface d'accouplement qui est du corps et qui est mise en contact avec le boîtier de l'ensemble de tête est une surface arquée convexe vers l'extérieur, et la surface arquée convexe vers l'extérieur est adaptée à la surface arquée concave vers l'intérieur.

12. Module de caméra rotatif télescopique selon la revendication 10 ou 11, dans lequel un composant d'étanchéité est disposé sur une paroi intérieure sur un côté sortie du manchon de guidage.

13. Module de caméra rotatif télescopique selon la revendication 5, dans lequel le corps est relié au mécanisme d'entraînement en utilisant un ensemble de tiges de liaison, et l'ensemble de tiges de liaison comprend une première tige de liaison, une seconde tige de liaison, un composant élastique de première tige de liaison, et un composant élastique de seconde tige de liaison ;
la première tige de liaison est reliée au mécanisme d'entraînement, et la seconde tige de liaison est reliée à la première tige de liaison ; et
le composant élastique de première tige de liaison précomprimé est disposé entre la première tige de liaison et la seconde tige de liaison, et le composant élastique de seconde tige de liaison précomprimé est disposé entre la seconde tige de liaison et le corps ; et une configuration est comme suit : lorsque le corps s'étend vers l'extérieur, la première tige de liaison entraîne la seconde tige de liaison en utilisant le composant élastique de première tige de liaison, et la seconde tige de liaison entraîne le corps en utilisant le composant élastique de seconde tige de liaison.

14. Module de caméra rotatif télescopique selon la revendication 13, dans lequel l'ensemble de tiges de liaison comprend en outre une base de tige de liaison, un arbre de première tige de liaison, et un arbre de seconde tige de liaison ;
deux premiers manchons d'arbre de liaison sont disposés à des parties d'extrémité qui sont de la première tige de liaison et qui sont reliées à la seconde tige de liaison, deux deuxièmes manchons d'arbre de liaison sont disposés à des parties d'extrémité qui sont de la seconde tige de liaison et qui sont reliées à la première tige de liaison, et les deux premiers manchons d'arbre de liaison viennent respectivement en butée contre les deux deuxièmes manchons d'arbre de liaison ;
le composant élastique de première tige de liaison est emmanché sur l'arbre de première tige de liaison ; et deux extrémités de l'arbre de première tige de liaison passent respectivement à travers les deux groupes des premiers manchons d'arbre de liaison et des deuxièmes manchons d'arbre de liaison qui viennent en butée l'un contre l'autre, et sont fixées à l'ensemble de base ;
un troisième manchon d'arbre de liaison est disposé au niveau d'une partie d'extrémité qui est de la seconde tige de liaison et qui est reliée au corps, et la base de tige de liaison est disposée sur le corps ; et
le composant élastique de seconde tige de liaison et le troisième manchon d'arbre de liaison sont emmanchés séquentiellement sur l'arbre de seconde tige de liaison, et deux extrémités de l'arbre de seconde tige de liaison sont fixées à la base de tige de liaison.

15. Dispositif électronique, comprenant le module de caméra rotatif télescopique selon l'une quelconque des revendications 1 à 14, dans lequel un boîtier du dispositif électronique a une ouverture pour l'ensemble de tête pour se rétracter ou s'étendre.
